# EUROPEAN PATENT APPLICATION

(11) **EP 1 819 004 A1**
(43) Date of publication of application: **15.08.2007**
(21) Application number: 05727654.5
(22) Date of filing: 31.03.2005
(51) Int. Cl.: H01M 4/90, H01M 4/88, H01M 4/92, H01M 8/04, H01M 8/24, H01M 8/10

(54) **ELECTRODE CATALYST, METHOD FOR PREPARATION THEREOF, DIRECT ALCOHOL FUEL CELL**

(30) Priority: 25.11.2004 JP 2004340704; 28.03.2005 JP 2005092140
(71) Applicant: Ricoh Company, Ltd., Tokyo 143-8555 (JP)
(72) Inventor: TANAKA, Shohji 15-15-802, Tsujidoushinmachi, , Kanagawa; 2510042 (JP); KIMURA, Okitoshi 15-40, Kikuna 3-chome,, 2220011 (JP); HASEGAWA, Aino 7-10-101, Ushikubohigashi, 2240014 (JP); USUI, Yuuma 6-11-106, Takayama, Tsuzuki-ku,, 2240065 (JP)
(74) Representative: Schwabe - Sandmair - Marx
(86) International application number: PCT/JP2005/006270
(87) International publication number: WO 2006/057080

(57) **Abstract**

An anode is formed by a metal electrocatalyst including an element mixture made up of platinum and at least one of ruthenium and molybdenum as an active constituent which electrocatalyst is fabricated under vacuum using a vapor phase method, and in this way, the speed of electrode oxidation reaction of alcohol such as methanol, ethanol, and isopropyl alcohol may be substantially increased. Also, by using such an electrocatalyst as the anode, a direct alcohol fuel cell with a high output may be realized using alcohol that is not reformed as fuel.

## Description

### TECHNICAL FIELD

The present invention relates generally to an anode electrocatalyst used in a fuel cell, and particularly to an electrocatalyst that directly supplies fuel containing alcohol as a main component to an anode to effectively realize electrode oxidation, and a high-output direct alcohol fuel cell that uses such an electrocatalyst for its anode.

### BACKGROUND ART

A fuel cell that uses hydrogen gas as fuel is generally capable of achieving high output density. It is noted that attention is particularly being directed to application of a polymer electrolyte fuel cell (PEFC) that uses hydrogen fuel as a power source of a high speed moving vehicle such as an electric car or a distributed power source.

Generally, a polymer electrolyte fuel cell has a stacked cell structure that is fabricated by stacking plural cell units, the cell unit corresponding to a membrane electrode assembly (MEA) that includes a fuel electrode (anode), an oxygen electrode (cathode), and a proton exchange membrane (PEM) arranged between the two electrodes. It is noted that hydrogen is supplied to the fuel electrode of the cell unit, oxygen or air as an oxidant is supplied to the oxygen electrode of the cell unit, and electromotive force is obtained by the oxidation or reductional reaction occurring at the electrodes.

In most cases, a platinum catalyst is used in the electrodes in order to activate electrochemical reactions occurring at the electrodes, and protons (hydrogen ions) generated at the fuel electrode are conducted to the oxygen electrode via the proton exchange membrane so that power may be generated.

Although high expectations are held for the polymer electrolyte fuel cell, the polymer electrolyte fuel cell may not be effectively used unless an infrastructure for providing hydrogen gas fuel is properly developed. However, there are many problems yet to be solved relating to storage and transportation of hydrogen fuel and methods for supplying the fuel, for example. Also, the polymer electrolyte fuel cell is generally recognized as being unsuitable for personal applications such as miniature portable electronic apparatuses.

In view of such problems associated with the PEFC, the use of a so-called reforming fuel cell is being contemplated. The reforming fuel cell is configured to reform hydrocarbon fuel such as liquid natural gas (LNG) or methane gas, or liquid fuel such as methanol to obtain hydrogen as fuel for the fuel cell.

However, hydrogen gas fuel obtained through reforming a raw fuel may contain small amounts of carbon monoxide (CO) and/or other impurities that may hinder the functions of the fuel cell.

As can be appreciated, reforming techniques may be used to obtain hydrogen from raw fuels such as methane gas or methanol. In the following, exemplary techniques for reforming methanol are described.

Methods of reforming methanol may generally be divided into the steam reforming (STR) method and auto thermal reforming method.

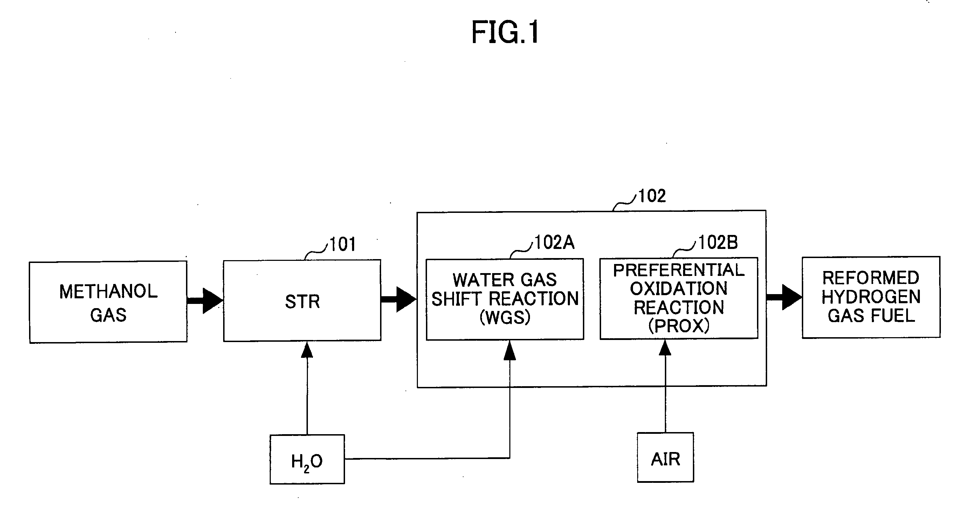

FIG. 1 is a block diagram illustrating the STR method.

It is noted that a steam reforming reaction of methanol may be realized by the following reaction:

CH₃OH + H₂O → CO₂ + 3H₂

In FIG. 1, the reaction process is divided into a reforming process 101 and a CO reducing process 102. The CO reducing process 102 is further divided into a H₂/CO ratio adjusting process 102A that realizes a water gas shift (WGS) reaction and a CO removing process 102B that realizes a preferential oxidation (PROX) reaction.

By performing the STR and CO reducing reaction process, the CO concentration within hydrogen gas fuel may generally be reduced to less than 100 ppm, and in some advanced applications, to less than or equal to 10 ppm (e.g., see Yoshihide Kotogami and Kenro Mitsuda, Industry and Electricity, 547, 19 (1998), and Donald S. Cameron, Platinum Metals Rev., 2003, 47, (1), 28-31, "Fuel Cells-Science and Technology 2002")

Table 1 as indicated below shows the component substances of hydrogen gas fuel obtained by reforming methanol and the concentrations of these substances. It is noted that the concentrations of the component substances of the hydrogen gas fuel shown in this table are obtained through experimental and analytical calculations.

**Table 1**

| Component Substances of Hydrogen Gas Fuel obtained after completing PROX of STR Process |
|---|
| • H₂: 72% |
| • CO₂: 24% |
| • N₂: 4% |
| • CO: 50-100 ppm |
| • O₂ : 0.5% |
| • CH₄: t.q. (trance quantity) |
| • HCOOCH₃: t.q. |
| • HCOOCH: t.q. |
| • CH₃OH : t.q. |

As can be appreciated from Table 1, the hydrogen gas fuel includes carbon monoxide (CO) at a concentration of 50-100 ppm. The concentrations of the other impurities of the hydrogen gas fuel aside from nitrogen and oxygen are sufficiently low so that they may be disregarded.

As is described above, CO can inactivate the catalysis of platinum even at a concentration of 10 ppm or lower to thereby hinder the power generating function of the fuel cell. In other words, CO causes the so-called poisoning of the catalyst, and accordingly, various techniques have been proposed to counter such a problem.

For example, a technique involving use of a platinum-ruthenium (Pt-Ru) alloy catalyst has been proposed in order to reduce catalyst poisoning. According to this technique, in a case where CO is contained as an impurity at a concentration of around several ppm to several dozen ppm in hydrogen gas (i.e., hydrogen in the gas phase), CO may be prevented from being adsorbed to the surface of platinum (Pt) as a catalyst poison to inactivate the catalysis of the platinum catalyst.

In the following, other exemplary techniques are described for reducing catalyst poisoning occurring in the fuel cell electrode reaction of reformed hydrogen gas fuel (referred to as 'reformed gas fuel' hereinafter).

Japanese Laid-Open Patent Publication No. 10-228912 discloses a catalyst for a reformed gas fuel (reformate) that corresponds to an alloy made of platinum and a transition element or an element belonging to group IIIa or group IVa of the periodic table, for example, or a supported structure of platinum and metal oxide.

Japanese-Translated International PCT Application Publication No. 8-501653 discloses various element compositions of catalysts including metal, metal oxides, metal alloys, and/or metallic compounds for application to an ion exchange membrane fuel cell, which technology is also disclosed in U.S. Patent No. 3,297,484 and U.S. Patent No. 3,369,886.

Japanese Patent No. 3351285 discloses an anode electrocatalyst for reducing catalyst poisoning by CO contained in reformed fuel gas that is realized by a combination of a platinum catalyst, a platinum-ruthenium multicomponent catalyst, and platinum-molybdenum multicomponent catalyst that are separately supported on carbon material.

Japanese Laid-Open Patent Publication No. 10-302810 discloses a catalyst including Lewis acid (solid acid) containing platinum or a platinum alloy and a rare earth element as an anode electrocatalyst for reducing catalyst poisoning by CO contained in reformed fuel gas. It is noted that a platinum alloy corresponds to a multicomponent alloy made of platinum and at least one alloyed element belonging to the platinum family or some other metal group.

Japanese Laid-Open Patent Publication No. 2001-15121 discloses a platinum-ruthenium (Ru)-molybdenum (Mo) three-element alloy catalyst and a platinum-ruthenium-tungsten (W) three-element alloy catalyst as anode electrocatalysts for reducing catalyst poisoning by CO contained in reformed fuel gas. Specifically, Japanese Laid-Open Patent Publication No. 2001-15121 discloses a technique for reducing the ruthenium content ratio while reducing catalyst poisoning of the Pt-Ru alloy catalyst.

Japanese Laid-Open Patent Publication No. 2001-15122 discloses a platinum-tungsten two-element alloy catalyst as an anode electrocatalyst for reducing catalyst poisoning by CO contained in reformed fuel gas. Specifically, Japanese Laid-Open Patent Publication No. 2001-15122 proposes using the platinum-tungsten two-element alloy catalyst to obtain the catalyst poisoning preventive effect of using a platinum-ruthenium alloy catalyst so that ruthenium, which is relatively expensive, may not have to be used.

As can be appreciated, the above disclosed techniques are concerned with reducing CO poisoning of a platinum catalyst within a polymer electrolyte fuel cell that uses hydrogen gas fuel or reformed gas fuel that can be electrochemically oxidized with ease at an anode electrode of the polymer electrolyte fuel cell.

CO poisoning of a platinum catalyst is generally conceived as an effect in which back donation of electrons from platinum molecules to CO molecules occurs so that the Pt-CO bond is strengthened. It is noted that there is a strong dependency between hydrogen oxidation activating current of platinum and the CO coverage. In this respect, CO poisoning of platinum may be regarded as a surface reaction occurring between molecules of a gas phase and the platinum surface. Most of the catalysts described above have been developed based on knowledge of the nature of such surface reaction between a catalyst metal surface and a gas phase to maintain hydrogen oxidation activity even under the existence of CO by arranging an atomic layer with strong oxygen chemical attraction near the Pt-CO and supplying an OH chemical group substance to induce CO oxidation.

However, there are still many aspects of the surface reaction between a catalyst metal and a gas phase that are not yet known such as the movement of CO with respect to the adsorption surface, the change in the state of electrons of the platinum coating, and the change in the CO coverage rate in response to such a change in the electrons, for example. The techniques described above are not based on quantitative measurements of such effects. Also, it is noted that a universal technique for solving the problem of platinum catalyst poisoning has not yet been established.

With respect to the growing demand for further miniaturization of the fuel cell, development of a new type of fuel cell that is different from the reforming fuel cell described above is being contemplated.

A direct alcohol fuel cell (DAFC), which is highly regarded as an advanced fuel cell, has a power generating cell structure similar to that of the polymer electrolyte fuel cell and is configured to directly supply alcohol as fuel to an anode electrode to induce an anodic oxidation reaction.

A direct methanol fuel cell (DMFC) that directly supplies methanol to an anode is a typical example of the direct alcohol fuel cell. The direct methanol fuel cell is a power generating device that operates at a relatively low temperature of around room temperature to 120 °C.

The direct methanol fuel cell, which has been studied and researched for a relatively long time, is configured to directly supply methanol fuel to its anode. Therefore, the direct methanol fuel cell does not need a reformer for extracting hydrogen from alcohol so that the device may be miniaturized and reduced in cost. Also, safety for handling the fuel may be adequately ensured and the overall operating mechanism may be simplified in the direct methanol fuel cell.

Despite the many advantages of the direct methanol fuel cell as described above, it is noted that an anodic oxidation reaction of methanol results in high overvoltage. In an oxygen-hydrogen fuel cell that uses hydrogen as fuel, since the oxidation speed of hydrogen is fast, the oxygen reduction process at the air electrode (oxygen electrode) may correspond to a rate controlling step. However, in the direct methanol fuel cell, the methanol oxidation process rather than the oxygen reduction process corresponds to the main part of the rate-controlling step so that the output may be decreased. Further, owing to the toxicity of methanol and its potential risk to health, various regulations are imposed with respect to the storage and handling of methanol.

In this regard, fuel cell technologies are being developed that involve the use of ethanol, dimethyl ether, or propane, for example, in place of methanol fuel. However, output characteristics equaling or superior to that of the direct methanol fuel cell have not yet been achieved in such fuel cells. It is noted that a fuel cell for personal use such as a mini fuel cell or a micromini fuel cell preferably uses ethanol as fuel in view of its low health risk factor (toxicity) and low environmental damage factor.

It is noted that platinum electrode may suitably be used to realize electrode oxidation of methanol or ethanol. More preferably, a platinum-ruthenium alloy electrode may be used (e.g., see Souza et al., Journal of Electroanalytical Chemistry, 420 (1997), 17-20, "Performance of a co-electrodeposited Pt-Ru electrode for the electro-oxidation of ethanol studied by in situ FTIR spectroscopy"). However, even in the case of using platinum-ruthenium alloy in the electrode, adequate electrode oxidation of methanol, ethanol, or some other alcohol fuel has not yet been achieved.

Accordingly, there is a demand for development of a high performance electrocatalyst to be applied to an anode of a direct fuel cell that is capable of achieving output characteristics that are at least equal to that achieved by the direct methanol fuel cell.

An electrode reaction of a fuel cell includes an anode reaction and a cathode reaction.

The cathode reaction is generally an oxygen reduction reaction. In order to obtain desirable power generating characteristics, the anode reaction has to be a reaction that is faster than the cathode reaction (i.e., the anode reaction has a higher reaction speed than the cathode reaction). In other words, the anode reaction preferably does not correspond to a rate controlling step.

In the case where hydrogen is used as fuel, such a condition may be satisfied. However, since handling of the hydrogen fuel cell is quite troublesome as is described above, the hydrogen fuel may not be suitably adapted to embody a power source for personal applications such as portable gadgets.

Accordingly, a liquid fuel cell is being considered as an alternative type of fuel cell, and particularly, the methanol fuel cell has been highly regarded as a suitable alternative to the hydrogen fuel cell. However, when methanol mixed with water is used or even when methanol is used alone, the overvoltage of anodic oxidation may be high, and adequate current may not be obtained in comparison to the case of using hydrogen.

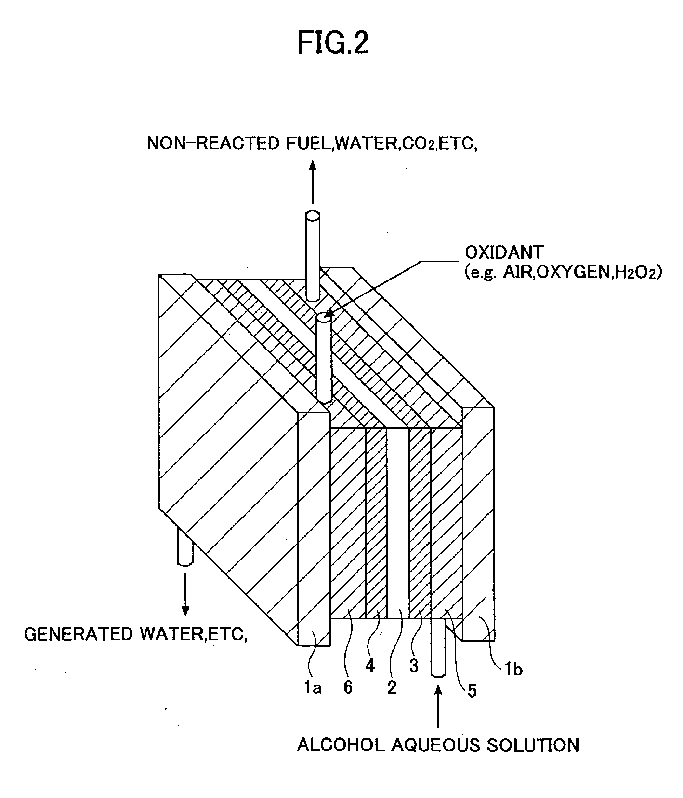

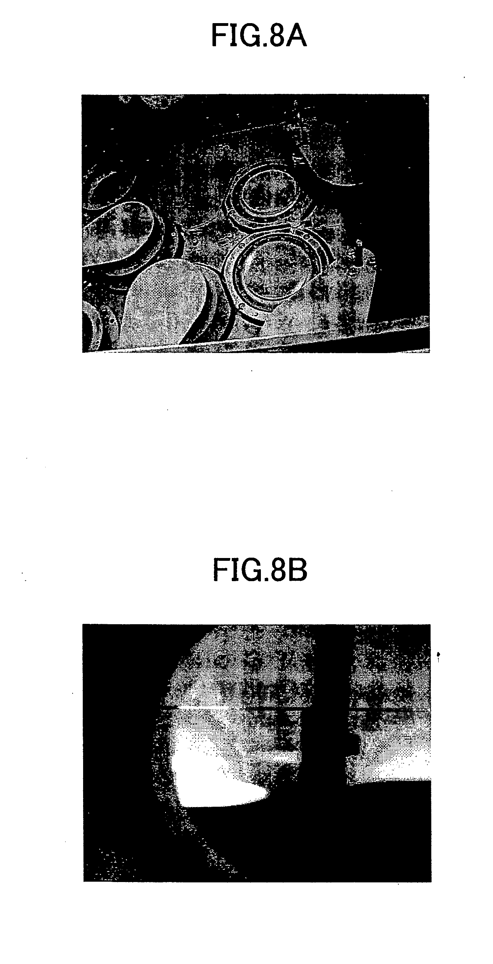

Although other types of liquid fuels such as ethanol and dimethyl ether are also being considered as alternative fuels, anodic oxidation characteristics superior to that obtained by methanol have not yet been achieved with these fuels as can be appreciated from the disclosures of Lamy et al., Journal of Power Sources, 105 (2002) 283-296, "Recent advances in the development of direct alcohol fuel cells (DAFC)" (e.g. see page 285; FIG. 2) and Lamy et al., Journal of Applied Electrochemimstry, 31, 799-809 (2001), "Electrocatalytic oxidation of aliphatic alcohols: Application to the direct alcohol fuel cell (DAFC)" (e.g., see page 806; FIG. 8), for example.

With regard to the characteristics of anodic oxidation of methanol and the characteristics of anodic oxidation of ethanol in a fuel cell using a platinum catalyst, for example, it is noted that the difference in the anode current densities between the two is quite large in comparison to the difference in their activation overvoltages. It is believed that such effects are consequences of the complicated chemical reaction schemes of the respective anodic oxidations of methanol and ethanol within a solution. It is noted that effects on the catalyst in these reactions are different from the CO poisoning mechanism within hydrogen gas as is described above. That is, the CO catalyst poisoning mechanism within a direct methanol fuel cell is quite different from the CO poisoning mechanism within a reformed fuel gas.

As can be appreciated, the anodic oxidation reaction in the case of using alcohol or an alcohol solution as fuel is rather complicated and cannot be explained merely as a surface reaction occurring between a catalyst surface and a gas phase such as the surface reaction between a catalyst metal and hydrogen as is described above.

Disclosures relating to anodic oxidation reaction of alcohol may be found in Zhu et al., Langmuir 2001, 17, 146-154, "Attenuated Total Reflection-Fourier Transform Infrared Study of Methanol Oxidation on Sputtered Pt Film Electrode" and Wasmas et al., Journal of Electroanalytical Chemistry, 461 (1999), 14-31, "Methanol oxidation and direct methanol fuel cells: a selective review", for example. However, different theories are held even among those skilled in the art.

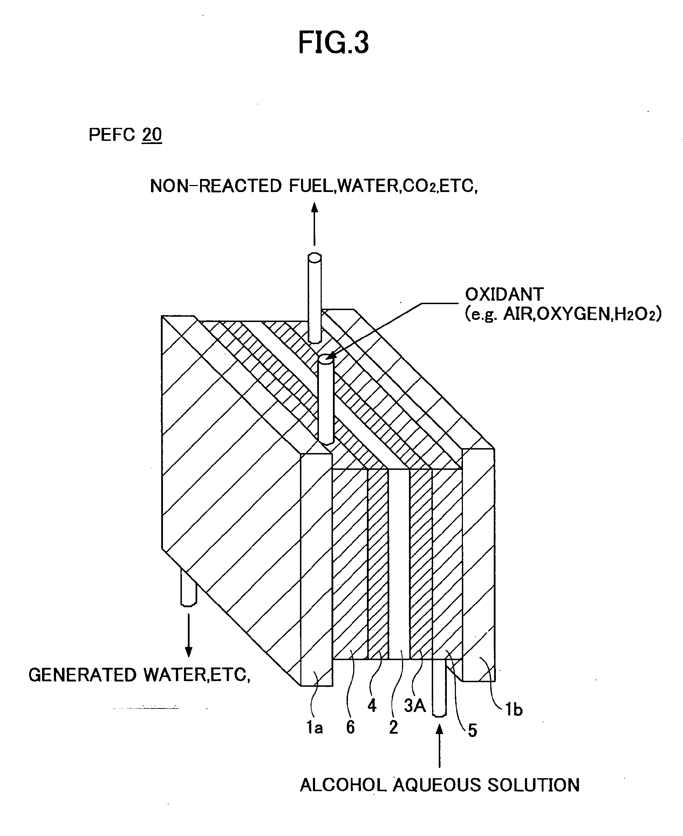

For example, with regard to direct anodic oxidation of methanol, a molecular adsorption/desorption model of a platinum catalyst surface is shown on page 22 of Wasmas et al., Journal of Electroanalytical Chemistry, 461 (1999), 14-31, "Methanol oxidation and direct methanol fuel cells: a selective review" (see FIG. 3 of Wasmas et al., Journal of Electroanalytical Chemistry, 461 (1999), 14-31, "Methanol oxidation and direct methanol fuel cells: a selective review"). However, different approaches exit with respect to views on adsorbing species and reaction schemes among those skilled in the art.

The conception that is commonly supported by the above cited documents, Lamy et al., Journal of Power Sources, 105 (2002) 283-296, "Recent advances in the development of direct alcohol fuel cells (DAFC)", Lamy et al., Journal of Applied Electrochemimstry, 31, 799-809 (2001), "Electrocatalytic oxidation of aliphatic alcohols: Application to the direct alcohol fuel cell (DAFC)", Zhu et al., Langmuir 2001, 17, 146-154, "Attenuated Total Reflection-Fourier Transform Infrared Study of Methanol Oxidation on Sputtered Pt Film Electrode", and Wasmas et al., Journal of Electroanalytical Chemistry, 461 (1999), 14-31, "Methanol oxidation and direct methanol fuel cells: a selective review" is that catalyst poisoning by a small amount of CO included in reformed gas fuel is regarded as a mutual physicochemical reaction between the species of the catalyst surface, H₂, and CO based on molecular spectroscopic findings on molecular species in the determination, desorption, and electrochemical reactions of the adsorbing species.

Direct anodic oxidation of alcohol corresponds to a reaction in solution in liquid phase regardless of whether water is contained in the alcohol. In this case, it is believed that many molecule species other than CO such as alcohol molecule species and fragments associated with anodic oxidation, and intermediate product species and by-products generated by adsorption/desorption or electrochemical reactions may also act as deterrents against anodic oxidation catalysis.

Table 2 as indicated below shows the findings of Gasteiger et al., Electrochemica Acta, 39 (1994), p. 1825, relating to the optimum amount of Ru to be contained within Pt-Ru two-element catalysts that are proposed as countermeasures against catalyst poisoning as is described above.

**Table 2**

| Optimum Amount of Ru within Pt-Ru Two-Element Catalyst |
|---|
| • For CO oxidation: 50 at% |
| • For methanol oxidation: 10 at% |

As can be appreciated from the above Table 2, mechanisms of the CO oxidation and the methanol oxidation may be assumed to be quite different.

It is noted that among the many factors causing a decrease in catalytic activity, the effect of carbon monoxide (CO) generated in the process of electrode oxidation being adsorbed to the electrode and poisoning the electrode metal primarily consisting of platinum is believed to be the cause of the methanol oxidation becoming the rate controlling step. Various types of electrocatalysts have been contemplated in order to counter such a problem. For example, the effects of CO poisoning may be reduced in the case of using a Pt-Ru alloy. However, even in such a case, the fuel cell electrode reaction rather than the oxygen reduction reaction is still the rate controlling step.

A technique disclosed in Japanese-Translated International PCT Application Publication No. 11-510311 relating to a direct methanol fuel cell may be regarded as an extended application of technology pertaining to CO poisoning within a reformed gas fuel to a two-element catalyst.

As can be appreciated from Lamy et al., Journal of Power Sources, 105 (2002) 283-296, "Recent advances in the development of direct alcohol fuel cells (DAFC)", Lamy et al., Journal of Applied Electrochemimstry, 31, 799-809 (2001), "Electrocatalytic oxidation of aliphatic alcohols: Application to the direct alcohol fuel cell (DAFC)", Zhu et al., Langmuir 2001, 17, 146-154, "Attenuated Total Reflection-Fourier Transform Infrared Study of Methanol Oxidation on Sputtered Pt Film Electrode", and Wasmas et al., Journal of Electroanalytical Chemistry, 461 (1999), 14-31, "Methanol oxidation and direct methanol fuel cells: a selective review", for example, although there are presently no fixed theories with regard to specific analyses of the anodic oxidation reaction of methanol, one course of a reaction process in the case of using a platinum-ruthenium catalyst may be described as follows.

At the fuel electrode of a direct methanol fuel cell, the following reaction occurs:

CH₃OH + H₂O → 6H⁺ + 6e⁻ + CO₂

In this case, reactions such as those described below may occur at the anode catalyst (anode electrode):

CH₃OH + xPt → PtxCH₂OH + H⁺ + e⁻

CH₂OH + xPt → PtxCHOH + H⁺ + e⁻

CHOH + xPt → PtxCOH + H⁺ + e⁻

CHOH + xPt → PtxCO + 2H⁺ + 2e⁻

PtxCHOH + PtOH → HCOOH + H⁺ + e⁻ + xPt

In this case, COH (or HCO) and CO act as strongly adsorbing species of platinum, and ruthenium is believed to induce the following reactions:

Ru + H₂O → RuOH + H⁺ + e⁻

PtxCOH + RuOH → CO₂ + 2H⁺ + 2e⁻ + xPt + Ru

PtxCO⁺ + RuOH → CO₂ + H⁺ + e⁻ + xPt + Ru

On the other hand, at the oxygen electrode, the following reaction may occur:

O₂+ 4H⁺ + 4e⁻→ 2H₂O

As can be appreciated, even in the case of using methanol, which is a one-carbon compound, the anodic oxidation reaction involves complicated reaction processes, and the anodic oxidation reaction of other alcohols such as ethanol, which is a two-carbon compound, may be even more complicated in comparison to the anodic oxidation reaction of methanol. For example, the relevant disclosures made on pages 800-802 of Lamy et al., Journal of Applied Electrochemimstry, 31, 799-809 (2001), "Electrocatalytic oxidation of aliphatic alcohols: Application to the direct alcohol fuel cell (DAFC)" are well-known to persons skilled in the art.

The anodic oxidation reaction of ethanol may be expressed as follows:

C₂H₅OH + 3H₂O → 12H⁺ +12e⁻ + 2CO₂

In this case, active species such as -COH, CO, -COOH, and -CH₃ corresponding to strongly adsorbing species to be adsorbed to the surface of platinum (poisoning object) may be easily generated from desorbed species and intermediate product species such as CH₃-CH₂OH, CH₃CHO, and CH₃COO generated in anode electrochemical reaction processes of ethanol.

As can be appreciated, the reaction scheme of ethanol is also quite complicated involving elementary processes and intermediate processes. Therefore, as can be appreciated from Lamy et al., Journal of Power Sources, 105 (2002) 283-296, "Recent advances in the development of direct alcohol fuel cells (DAFC)" and Lamy et al., Journal of Applied Electrochemimstry, 31, 799-809 (2001), "Electrocatalytic oxidation of aliphatic alcohols: Application to the direct alcohol fuel cell (DAFC)", for example, an anodic oxidation current of ethanol superior to that of methanol has not yet been successfully achieved. Also, as can be appreciated from Fujita et al., Fuel Cell Symposium Abstracts, 42nd, 590-591 (2001), "Power Generating Capacity of Direct Methanol Fuel Cells", in the case of using a conventional Pt-Ru two-element catalyst, the single cell power generating capacity (power voltage, power density) of a direct ethanol fuel cell is equal to or less than half of that of the direct methanol fuel cell. Thus, although the direct ethanol fuel cell is capable of generating power, it is still in its development stage and cannot be readily used in practical applications. It is noted that the situation is the same for other types of organic liquid fuel cells as well.

### DISCLOSURE OF THE INVENTION

According to an aspect of the present invention, a new approach is provided with regard to direct oxidation of alcohol in a direct alcohol fuel cell, which approach is substantially different from the conventional approach relating to improving electrocatalyst performance or improving poisoning resistance in the case of using hydrogen fuel or reformed hydrogen fuel in a polymer electrolyte fuel cell as is described in the above-cited documents, for example. In the following, specific aspects of the present invention are described.
(1) Providing a multicomponent catalyst as an anodic oxidation catalyst having a multicomponent structure that is suitably used in a direct alcohol fuel cell
   According to the first aspect (1) of the present invention, the same electrocatalyst may be commonly used with plural alcohols such as methanol, ethanol, and isopropyl alcohol to achieve high anodic oxidation activity.
   As is described above in the "Description of the Related Art", the electrode oxidation speed of alcohol fuel is- relatively slow; however, if the alcohol fuel can be directly supplied to the fuel electrode of the fuel cell, safety may be ensured. Further, out of the many forms of alcohol, ethanol corresponding to a widely used type of fuel, may preferably be used as fuel for a miniaturized fuel cell adapted for personal use. Also much room for improvement exits with respect to the so-called direct methanol fuel cell (DMFC) using methanol fuel, and in this respect, methanol may possibly be used as fuel for the next generation fuel cell. Accordingly, there is a demand for an electrocatalyst developed in consideration of the complicacy of the electrode oxidation reaction.
   Also, the first aspect (1) of the present invention includes providing an electrocatalyst structure corresponding to a multicomponent nanoscale structure that is effective in an electrode oxidation reaction.
   Also, the first aspect (1) of the present invention includes providing an electrocatalyst capable of realizing a low overvoltage for plural representative alcohol fuels with the same catalyst electrode structure and thereby realizing high electromotive force and high output in fuel cell power generation.
   Further, the first aspect (1) of the present invention includes providing an electrocatalyst that is capable of realizing good catalyst poisoning resistance characteristics for plural representative alcohol fuels with the same electrocatalyst structure.
(2) Reducing the amount of precious/rare metal used in an electrocatalyst
   It is noted that environmental protection is a widely recognized concern, and there is a high demand for developing environmentally-friendly fuel cells. Also, it is noted that precious/rare metals such as platinum and ruthenium are used in the catalyst (electrocatalyst) of fuel cells, and making efficient use of such limited resources is a concern from both industrial and environmental standpoints. In this respect, techniques are in demand for achieving adequate catalysis using alternative metals in place of precious/rare metals so that that amount of precious/rare metal such as platinum or ruthenium used may be reduced. The second aspect (2) of the present invention relates to providing an electrocatalyst that is capable of reducing overvoltage of a reaction occurring within a fuel cell and improving current density.
(3) Providing a method for manufacturing the electrocatalyst according to the above aspects (1) and (2) of the present invention
   Typically an electrocatalyst may be manufactured through a process as is disclosed in Japanese Laid-Open Patent Publication No. 2001-15121, for example. Specifically, using the reaction occurring within a solution, elements of a catalyst are separately stirred, macerated, and impregnated for a relatively long period of time to control their respective content amounts after which a reduction process and a thermal process, for example, are performed under a high temperature for a relatively long period of time. However, in such a process, the element composition and catalyst configuration have to be carefully controlled, and there is much room for improvement with regard to repeatability, controllability, and productivity of the process. The third aspect (3) of the present invention relates to providing an efficient method for manufacturing an electrocatalyst that enables simultaneously controlling the elements and properly adjusting the mixing rate (composition rate) and assembled configuration (e.g., size and shape) of the element mixture using a reaction site that does not include impurities.
(4) Providing a convenient fuel cell
   As is described above, there is a high demand for various types of fuel cells according to various social needs. For example, in addition to the demand for a stationary fuel cell, there is also a high demand for a safe portable fuel cell or a miniaturized high-power fuel cell that is capable of safely storing and handling fuel. The fourth aspect (4) of the present invention relates to providing an electrocatalyst that realizes good catalysis in the case of using methanol, ethanol, or isopropyl alcohol that are conveniently used as fuel and a method of manufacturing such an electrocatalyst. According to the fourth aspect (4) of the present invention, a miniaturized high-powered direct alcohol fuel cell may be realized that can be used to power and activate various types of electronic apparatuses, electric machines, and electronic machines used in various social settings including industrial, domestic, and public settings.

In the following, specific embodiments of the present invention for realizing the above aspects of the present invention that have been conceived by the inventors of the present invention through dedicated research are described.

According to an embodiment of the present invention, one or more or the above aspects of the present invention may be realized by using one of the following electrocatalysts as an anode catalyst:
an electrocatalyst for direct oxidation of alcohol as claimed in claims 1 and 2 that includes a mixture of platinum and a substance made of at least one of molybdenum and a molybdenum compound as an active constituent; or
an electrocatalyst for direct oxidation of alcohol as claimed in claims 3 and 4 that includes a mixture of platinum, ruthenium, and a substance made of at least one of molybdenum and a molybdenum compound as an active constituent.

Also, according to another embodiment of the present invention, one or more of the above aspects of the present invention may be realized by:
a method for manufacturing an electrocatalyst as claimed in claim 5 which method involves directly forming a film with a material of the electrocatalyst on an electron conductive base material using a vapor phase method, wherein the pressure during film formation is within a range of 2X10⁻²-10 Pa and the temperature of the electron conductive base material during film formation is within a range of 25-600 °C; or
a method for fabricating an electrocatalyst for direct oxidation of alcohol as claimed in claim 8, which method involves directly forming a film with a material of the electrocatalyst on an electron conductive base material through sputtering, wherein the pressure during film formation is within a range of 0.8-10 Pa and the temperature of the electron conductive base material during film formation is within a range of 25-600 °C.

Also, according to another embodiment of the present invention, one or more of the above aspects of the present invention may be realized by:
a method for fabricating an electrocatalyst as claimed in claim 6 which method involves directly forming a film with a mixture of platinum and a substance made of at least one of molybdenum and a molybdenum compound on an electron conductive base material using a vapor phase method, wherein the pressure during film formation is within a range of 2X10⁻²-10 Pa and the temperature of the electron conductive base material during film formation is within a range of 25-600 °C; or
a method for fabricating an electrocatalyst as claimed in claim 7 which method involves directly forming a film with a mixture of platinum, ruthenium, and a substance made of at least one of molybdenum and a molybdenum compound on an electron conductive base material using a vapor phase method, wherein the pressure during film formation is within a range of 2×10⁻²-10 Pa and the temperature of the electron conductive base material during film formation is within a range of 25-600 °C.

Further, according to another embodiment of the present invention, one or more of the above aspects of the present invention may be realized by:
a method for fabricating an electrocatalyst as claimed in claim 9 which method involves directly forming a film with a mixture of platinum and a substance made of at least one of molybdenum and a molybdenum compound on an electron conductive base material through sputtering, wherein the pressure during film formation is within a range of 0.8-10 Pa and the temperature of the electron conductive base material during film formation is within a range of 25-600 °C; or
a method for fabricating an electrocatalyst as claimed in claim 11 which method involves directly forming a film with a mixture of platinum, ruthenium, and a substance made of at least one of molybdenum and a molybdenum compound on an electron conductive base material through sputtering, wherein the pressure during film formation is within a range of 0.8-10 Pa and the temperature of the electron conductive base material during film formation is within a range of 25-600 °C.

Further, according to another embodiment of the present invention, one or more of the above aspects of the present invention may be realized by:
a method for manufacturing an electrocatalyst for direct oxidation of alcohol as claimed in claim 10, wherein
the electrocatalyst for direct oxidation of alcohol includes a mixture of platinum and a substance made of at least one of molybdenum and a molybdenum compound as a main component, the atom ratio Pt:Mo between the platinum element and the molybdenum element of the mixture being within a range of 90-65:10-35 (at%); and the electrocatalyst is fabricated through sputtering, the pressure during sputtering (pressure during film formation) being within a range of 0.8-10 Pa and the temperature of the electron conductive base material during film formation being within a range of 25-600 °C; or
a method for manufacturing an electrocatalyst for direct oxidation of alcohol as claimed in claim 12, wherein
the electrocatalyst for direct oxidation of alcohol includes a mixture of platinum, ruthenium, and a substance made of at least one of molybdenum and a molybdenum compound as a main component, the atom ratio Pt:Ru:Mo between the platinum element, the ruthenium element, and the molybdenum element of the mixture being within a range of 75-40:40-15:35-2 (at%); and the electrocatalyst is fabricated through sputtering, the pressure during sputtering (pressure during film formation) being within a range of 0.8-10 Pa and the temperature of the electron conductive base material during film formation being within a range of 25-600 °C.

Further, according to another embodiment of the present invention, one or more of the above aspects of the present invention may be realized by a fuel cell having plural (power generating) cells that are stacked as claimed in any one of claims 13, 14, 18, and 19 which fuel cell uses an electrocatalyst according to an embodiment of the present invention.

Further, according to another embodiment of the present invention, one or more of the above aspects of the present invention may be realized by a fuel cell having plural (power generating) cells that are arranged into a plane and are serially connected as claimed in any one of claims 13-15 and 18-21 which fuel cell uses an electrocatalyst according to an embodiment of the present invention.

Further, according to another embodiment of the present invention, one or more of the above aspects of the present invention may be realized by using a mixed solution of methanol and water as fuel in the above fuel cell using an electrocatalyst according to an embodiment of the present invention as claimed in claim 16.

Further, according to another embodiment of the present invention, one or more of the above aspects of the present invention may be realized by using a mixed solution of ethanol and water as fuel in the above fuel cell using an electrocatalyst according to an embodiment of the present invention as claimed in claim 17.

Further, according to another embodiment of the present invention, one or more of the above aspects of the present invention may be realized by an electronic apparatus as claimed in claim 22 that incorporates or is connected to a direct alcohol fuel cell which uses an electrocatalyst according to an embodiment of the present invention.

According to the inventions of claims 1 and 2, by using a material including a mixture of platinum and a substance made of at least one of molybdenum and a molybdenum compound as an active constituent, an electrocatalyst for direct oxidation of alcohol with reduced overvoltage, increased current density, and superior resistance to catalyst poisoning occurring during power generation may be realized compared to the conventionally used Pt-Ru two-element catalyst. Such an electrocatalyst for direct oxidation of alcohol may realize advantageous effects with respect to direct oxidation of alcohol, and by using such an electrocatalyst for direct oxidation of alcohol, a direct alcohol fuel cell with a high electromotive force and a high current density may be realized. Also, according to the present inventions, a catalyst may be fabricated without using ruthenium which corresponds to a precious metal. In the direct alcohol fuel cell, properties may be easily optimized through catalyst designing, and the amount of platinum used may be reduced.

According to the inventions of claims 3 and 4, by using a material including a mixture of platinum, ruthenium, and a substance made of at least one of molybdenum and a molybdenum compound as an active constituent, an electrocatalyst for direct oxidation of alcohol with reduced overvoltage, increased current density, and superior resistance to catalyst poisoning occurring during power generation may be realized compared to the conventionally used Pt-Ru two-element catalyst. Such an electrocatalyst for direct oxidation of alcohol may realize advantageous effects with respect to direct oxidation of alcohol, and by using such an electrocatalyst for direct oxidation of alcohol, a direct alcohol fuel cell with a high electromotive force and a high current density may be realized. Also, according to the present inventions, a catalyst may be fabricated without using ruthenium which corresponds to a precious metal. In the direct alcohol fuel cell, properties may be easily optimized through catalyst designing, and the amount of platinum used may be reduced.

According to the invention of claim 5, by forming the element material of an electrocatalyst simultaneously on a substrate (support) in a vacuum reaction site from which impurities are removed, the ratio of the element contents may be arbitrarily controlled, and by setting the temperature of the electron conductive base material to a suitable temperature within a range of 25-600 °C, the film configuration may also be controlled, and the amount of component elements to be used may be reduced compared to the conventional electrocatalyst fabrication method.

According to the invention of claim 8, upon forming the material of an electrocatalyst on a substrate (support) in a manner similar to claim 5, by performing physical vapor deposition (PVD) through sputtering the component elements of the material under a vacuum environment where impurities are removed, the ratio of the element contents may be arbitrarily controlled, and by setting the temperature of the electron conductive base material to a suitable temperature within a range of 25-600 °C, the film configuration may also be controlled, and the amount of component elements to be used may be reduced compared to the conventional electrocatalyst fabrication method.

According to the inventions of claims 6, 7, 9, and 11, upon realizing an electrocatalyst for direct oxidation of alcohol with either a mixture of platinum and a substance made of at least one of molybdenum and a molybdenum compound, or a mixture of platinum and ruthenium in a manner similar to claims 5 or 8, since the mixture may be simultaneously formed on a substrate (support) under a vacuum environment where impurities are removed by a vapor phase method or sputtering, the ratio of the element contents may be arbitrarily controlled, and by setting the temperature of the electron conductive base material to a suitable temperature within a range of 25-600 °C, the film configuration may also be controlled, and the amount of component elements to be used may be reduced compared to the conventional electrocatalyst fabrication method.

According to the invention of claim 10, in an electrocatalyst for direct oxidation of alcohol containing a mixture of platinum and a substance made of at least one of molybdenum and a molybdenum compound as an active constituent, by setting the atom ratio Pt:Mo between the elements platinum and molybdenum within a range of 90-65:10-35 (at%), setting the sputtering pressure during fabrication of the electrocatalyst through sputtering (pressure during film formation) to be within a range of 0.8-10 Pa, and setting the temperature of the electron conductive base material during film formation within a range of 25-600 °C, an electrocatalyst for direct oxidation of alcohol may be obtained that does not include ruthenium and realizes reduced overvoltage, increased current density, and superior resistance to catalyst poisoning occurring during power generation compared to the conventionally used Pt-Ru two-element catalyst. In this way, a highly active direct oxidation of alcohol may be enabled.

According to the invention of claim 12, in an electrocatalyst for direct oxidation of alcohol containing a mixture of platinum, ruthenium, and a substance made of at least one of molybdenum and a molybdenum compound as an active constituent, by setting the atom ratio Pt:Ru:Mo between the elements platinum, ruthenium, and molybdenum within a range of 75-40:40-15:35-2 (at%), setting the sputtering pressure during fabrication of the electrocatalyst through sputtering (pressure during film formation) to be within a range of 0.8-10 Pa, and setting the temperature of the electron conductive base material during film formation within a range of 25-600 °C, the amount of ruthenium to be used may be reduced, and an electrocatalyst for direct oxidation of alcohol may be obtained that realizes reduced overvoltage, increased current density, and superior resistance to catalyst poisoning occurring during power generation compared to the conventionally used Pt-Ru two-element catalyst. In this way, a highly active direct oxidation of alcohol may be enabled.

According to the invention of claim 13, by using an electrocatalyst containing a mixture of platinum and a substance made of at least one of molybdenum and a molybdenum compound, or a mixture of platinum and ruthenium as an active constituent, a highly active direct alcohol fuel cell with reduced overvoltage, increased current density, and superior resistance to catalyst poisoning occurring during power generation may be realized.

According to the inventions of claims 14, 18, and 19, by arranging a fuel cell into a stacked cell structure using an electrocatalyst according to an embodiment of the present invention, a highly active direct alcohol fuel cell with reduced overvoltage, increased current density, and superior resistance to catalyst poisoning occurring during power generation may be realized.

According to the inventions of claims 15, 20, and 21, by arranging a fuel cell into a planar connection cell structure using an electrocatalyst according to an embodiment of the present invention, a highly active direct alcohol fuel cell with reduced overvoltage, increased current density, and superior resistance to catalyst poisoning occurring during power generation may be realized.

According to the invention of claim 16, by using a mixed solution of methanol and water as fuel in a fuel cell according to an embodiment of the present invention, a highly effective direct methanol fuel cell with reduced overvoltage for electrode oxidation of methanol and a significantly improved output current density may be realized.

According to the invention of claim 17, by using a mixed solution of ethanol and water as fuel in a fuel cell according to an embodiment of the present invention, a highly effective direct ethanol fuel cell with reduced overvoltage for electrode oxidation of ethanol and a significantly improved output current density may be realized. According to the present invention, the widely used ethanol fuel that has low toxicity even among alcohol fuel cells may be used as fuel, and since ethanol may be fabricated from biomass resources, using such material as fuel may be beneficial from the aspect of environmental protection. Also, wider options may be offered with respect to fuel selection, fuel access, and fuel handling and safety may be ensured to thereby enable application of the fuel cell to industrial fields that were not previously considered as applicable fields.

According to the invention of claim 22, by installing or connecting a direct alcohol fuel cell, which includes a mixed solution of alcohol and water corresponding to a conventionally used fuel as a main component, in/to various electronic apparatuses as a power source, a mobile or portable electronic apparatus that enables easy handling of fuel may be provided. Accordingly, a fuel cell according to an embodiment of the present invention is not limited to industrial applications and may also be applied to machines and apparatuses that are used in everyday life situations associated with commerce, education, welfare, or entertainment, for example.

### BRIEF DESCRIPTION OF THE DRAWINGS

FIG.1 is a diagram illustrating a conventional methanol reforming process;
FIG. 2 is a diagram showing a single cell structure of a polymer electrolyte fuel cell;
FIG. 3 is a diagram showing a single cell structure of a direct alcohol fuel cell according to a first embodiment of the present invention;
FIG. 4 is a diagram showing a configuration of a direct alcohol fuel cell according to a second embodiment of the present invention;
FIG. 5 is a diagram showing a configuration of a direct alcohol fuel cell having a stacked structure according to a third embodiment of the present invention;
FIG. 6 is a diagram showing an exemplary configuration of a direct alcohol fuel cell system according to en embodiment of the present invention;
FIG. 7 is a diagram showing a configuration of a multicomponent simultaneous sputtering apparatus that is configured to fabricate an electrocatalyst according to an embodiment of the present invention;
FIG. 8A is a diagram showing an example of a multicomponent cathode arrangement according to an embodiment of the present invention;
FIG. 8B is a diagram illustrating catalyst formation through quaternary sputtering according to an embodiment of the present invention;
FIG. 9 is a diagram showing current-potential curves of electrode oxidations of ethanol in examples 3, 4, 6, 8, 9, of the present invention and comparison example 2;
FIG. 10 is a diagram showing an example of an electronic apparatus that uses a direct alcohol fuel cell according to a fourth embodiment of the present invention;
FIG. 11A is a diagram showing an example of a CV curve of a platinum catalyst;
FIG. 11B is a diagram showing actual surface areas of platinum catalysts fabricated under differing sputtering conditions;
FIG. 12A is a diagram showing electrode oxidation characteristics obtained upon performing oxidation of methanol using electrocatalysts sputtered at a substrate temperature of 300 °C;
FIG. 12B is a diagram showing electrode oxidation characteristics obtained upon performing oxidation of ethanol using electrocatalysts sputtered at a substrate temperature of 300 °C;
FIG. 13 is a diagram showing relationships between the substrate temperature during sputtering and the current density obtained upon performing oxidation of methanol using the electrocatalyst formed by the sputtering;
FIG. 14A is a diagram showing a scanning electron microscope image of the surface of a catalyst film that is fabricated through sputtering without heating;
FIG. 14B is a diagram showing a transmission electron microscope image of a cross-section of a catalyst film that is fabricated through sputtering without heating;
FIG. 15A is a diagram showing a scanning electron microscope image of the surface of a catalyst film sputtered at a temperature of 600 °C;
FIG. 15B is a diagram showing a transmittion electron microscope image of a cross-section of a catalyst film sputtered at a temperature of 600 °C; and
FIG. 16 is a diagram showing results of an elemental analysis in the depth direction of a catalyst film.

### BEST MODE FOR CARRYING OUT THE INVENTION

### [General Structure of Polymer Electrolyte Fuel Cell]

In the following, a general structure (configuration) of a fuel cell (PEFC) is described as a basis for describing configurations and operations of preferred embodiments of the present invention.

FIG. 2 is a diagram showing a generalized single cell structure of a single cell component of a fuel cell that may be applied to embodiments of the present invention. For example, the structure shown in this drawing may be applied to the structures claimed in claims 13-15 and 19-20.

The fuel cell shown in FIG. 2 includes an ion exchange membrane 2 arranged between frames 1a and 1b. Further, an anode (synonymous with fuel electrode) 3 and a cathode (synonymous with air electrode) 4 arranged on opposing sides of the ion exchange membrane 2 are arranged between the frames 1a and 1b. Also, a fuel circulating part 5 and an oxidizer circulating part 6 are respectively arranged on the outer sides of the anode 3 and the cathode 4. In the example of FIG. 2, a mixed solution of alcohol and water is used as fuel. However, it is noted that hydrogen gas or reformed gas may also be used as fuel.

The ion exchange membrane 2 may be an ion conductive membrane such as an anion or cation exchange membrane but is preferably a proton conductive membrane. It is noted that any known type of material such as high polymer membrane material as is represented by perfluoroalkylsulfonic acid polymer may be used as the ion exchange membrane 2.

The anode 3 and the cathode 4 may be made of porous carbon paper having predetermined catalysts applied thereon, for example. However, the material of the anode 3 and the cathode 4 is not limited to carbon paper, and any porous material having electroconductive properties that does not hinder the dispersion of liquid fuel or oxidizers may be used. By arranging an electrolytic membrane 2 between the anode 3 and the cathode 4, or by bonding the above three membranes through hot pressing or casting, for example, a membrane-electrode assembly (MEA) may be realized. It is noted that a water repellant agent such as polytetrafluoroethylene (PTFE) may be added or deposited in/on the porous carbon paper as is necessary or desired.

### [First Embodiment]

FIG. 3 is a diagram showing a configuration of a polymer electrolyte fuel cell (PEFC) 20 according to a first embodiment of the present invention. It is noted that in FIG. 3, components that are identical to those shown in FIG. 2 are given the same reference numerals, and their descriptions are omitted.

As is shown in FIG. 3, the polymer electrolyte fuel cell 20 has a similar configuration to that of FIG. 2, but uses an anode 3A that includes an electrocatalyst for direction oxidation of alcohol according to an embodiment of the present invention as an active constituent.

Specifically, according to the first embodiment of the present invention, an electrocatalyst for direct oxidation of alcohol that includes a mixture of platinum and a substance including at least one of molybdenum and a molybdenum compound as an active constituent is used as the anode 3A.

In the following, preferred ranges of the atom ratio between platinum and non-platinum elements contained in the electrocatalyst are described. In a case where the electrocatalyst is made up of platinum and molybdenum, the atomic ratio between platinum and molybdenum elements (Pt:Mo) is preferably 90-65:10-35 (at%). In a case where ruthenium is included in the electrocatalyst, the atomic ratio between platinum, ruthenium, and molybdenum (Pt:Ru:Mo) is preferably 75-40:40-15:35-2 (at%). It is noted that the electrocatalyst made up of the above elements may be a monocrystal, a polycrystal, noncrystalline, or an aggregate of microparticle clusters of the elements.

The electrocatalyst as is described above may be used alone as the anode 3A, or it may alternatively be supported by a suitable conductive base material. In other words, an electrocatalyst structure including a suitable conductive support may be used as the anode 3A. The conductive support may be a metal thin film made of gold, platinum, stainless steel, or nickel; a meshed or spongiform metal film or conductive material; or conductive particles such as carbon power (powder), titanium oxide, silica, or tin oxide, for example.

The electrocatalyst structure may be formed on the conductive support through known vapor phase methods (almost synonymous with vacuum thin film fabrication method) such as sputtering; PVD (physical vapor depositions) methods other than sputtering such as vacuum deposition or gas vaporization; or CVD (chemical vapor deposition) methods such as thermal CVD. Alternatively, other known chemical or electrochemical processes including electroplating, non-electroplating, and impregnation, for exmaple; or microparticle fabrication technology including vacuum arc remelting and mechanical milling, for example, may be used. As is described above, fabrication of the electrocatalyst structure including the electrocatalyst material according to an embodiment of the present invention may be realized through application of a combination of physical, chemical, and mechanical processing technologies on the electrocatalyst material and the support.

The anode material that is fabricated in the manner described above may be arranged to directly abut on the ion exchange membrane 2 as the anode 3A. Alternatively, the anode material may be arranged to abut on the ion exchange membrane 2 along with an ion conductive material or an additive as is necessary or desired. The additive may be a conductive material such as carbon or a water repellant material such as tetrafluoroethylene, for example. Although the ion conductive material may be any type of material that has ion conducting properties, the same material as that of the ion exchange membrane 2 is preferably used to obtain particularly good results. It is noted that the anode 3A may be arranged to abut on the ion exchange membrane 2 using known methods such as hot pressing or casting, for example.

In many cases, the cathode 4 is realized by mixing carbon particles containing platinum with ion conductive material and arranging the mixture to abut on the ion exchange membrane 2. It is noted that the ion conductive material is preferably made of the same material as the ion exchange membrane 2. The cathode 4 may be arranged to abut on the ion exchange membrane 2 using known methods such as hot pressing or casting, for example. Also, it is noted that the material of the cathode 4 is not limited to carbon particles containing platinum, and other materials such as precious metals or materials containing such precious metals (electrocatalysts), or organic metal complexes or baked versions thereof may be used, for example.

On the outer side of the cathode 4, an oxidizer inlet for introducing an oxidizer (e.g., air in many cases) is arranged at the upper side, and an oxidizer outlet for discharging non-reacted air and the oxidized product (e.g., water in many cases) is arranged on the lower side. In one example, forced suction and/or forced discharge means may be used. Also, a natural convection hole for the air may be arranged at the frame 1a.

As is shown in FIG. 3, a liquid fuel circulating part 5 is arranged on the outer side of the anode 3A.

The liquid fuel circulating part 5 may be an alcohol fuel accommodating part for accommodating alcohol fuel or an alcohol fuel circulating channel that is connected to an external fuel accommodating part (not shown), for example. It is noted that the alcohol fuel may be stirred through natural convection and/or forced convection, and forced convection means (not shown) may be provided as is necessary or desired.

It is noted that alcohol alone or a mixture of alcohol and water may be used as fuel to be directly supplied to the anode 3A. In a preferred embodiment, a mixture of organic liquid fuel that is widely distributed in the market such as methanol, ethanol, or isopropyl alcohol and water is used to effectively prevent crossover and obtain good cell voltage and output.

It is noted that FIGS. 2 and 3 illustrate single cell structures of fuel cells. Such single cell structures may be used alone, or alternatively, plural cell units may be connected in series and/or in parallel to realize a multi-cell structure according to an embodiment of the inventions of claims 15-18, for example. The cells may be connected to each other using a bipolar plate fabricated in a conventional manner such as a bipolar plate fabricated by forming groove-type fluid channels on expanded graphite, a bipolar plate fabricated by molding a mixture of carbon material such as expanded graphite and heat resistive resin, or a bipolar plate fabricated by coating an anti-oxidizing film and a conductive film on a metal plate such as stainless steel base material, for example. In another example, the cells may be connected through planar connection as is described in "2000 Fuel Cell Seminar Abstracts", pp. 719-821. It is noted that other connection methods may be used to connect the cells as well.

### [Second Embodiment]

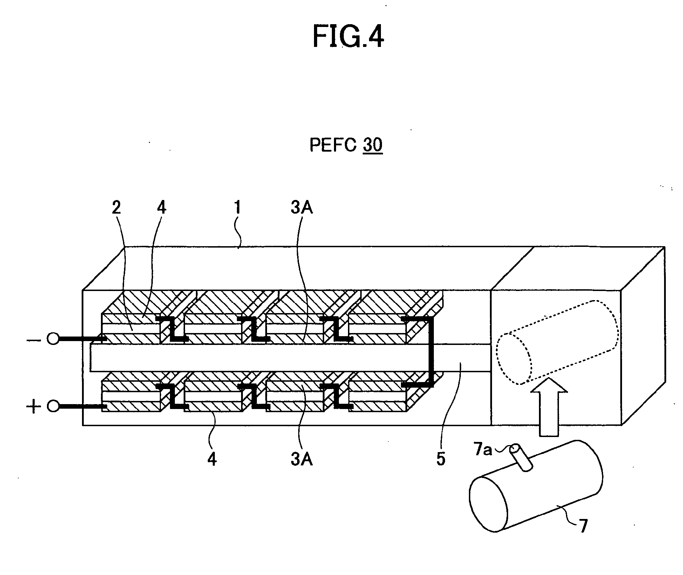

FIG. 4 is a diagram showing configuration of a polymer electrolyte fuel cell 30 according to a second embodiment of the present invention. It is noted that in FIG. 4, components that are identical to those shown in the previous drawings are given the same reference numerals and their descriptions are omitted.

As is shown in FIG. 4, the fuel cell 30 has a flat rectangular configuration and includes a fuel supply channel 5 that is arranged to partition the internal space of the fuel cell 30 into upper and lower sections. The fuel cell 30 also includes a liquid fuel accommodating part that includes a container 7 shaped into a cylinder, for example, and is detachably arranged in the fuel cell 30.

The container 7 has a small hole 7a arranged at its side face so that fuel accommodated within the container 7 may be supplied to the fuel supply channel 5 via the small hole 7a. The small hole 7a is sealed by predetermined sealing means (not shown) before the container 7 is loaded inside the frame 1 of the fuel cell 30 so that fuel may be hermetically accommodated within the container 7. The small hole 7a is positioned at the side of the container 7 so that it may be properly connected to the fuel supply channel 5 when the container 7 is loaded into the fuel cell 30.

The fuel cell 30 corresponds to one embodiment of the invention of claim 17 that includes at least two cells.

More specifically, the fuel cell 30 of FIG. 4 includes a first cell group made up of four cells arranged on the upper side of the fuel supply channel, and a second cell group made up of four cells arranged on the lower side of the fuel supply channel 5. It is noted that each of the cells of the cell first and second cell groups includes an anode 3A, a cathode 4, and an ion exchange membrane arranged between the anode 3A and the cathode 4, and is independently mounted within the frame 1.

It is noted that the anode 3A of each of the cells may be identical to that described above in relation to the first embodiment and includes an electrocatalyst for anodic oxidation of alcohol as an active constituent.

The cells of each cell group are arranged to be planar and are serially connected to each other. The anodes 3A of the first cell group and the second cell group are arranged to face each other at opposite sides of the fuel supply channel 5. Also, the cathodes 4 of the first cell group and the second cell group are arranged to be directed outward. By arranging the cells of the fuel cell 30 in the manner described above, the size of the fuel cell may be reduced so that the fuel cell 30 may be suitably used as a micro power source for a portable apparatus, for example. Also, since the container 7 accommodating the fuel is configured to be detachable, fuel may be easily replenished, and the fuel cell 30 according to the present embodiment may be suitably used as a power source for a portable apparatus from this aspect as well.

In the present embodiment, fuel made primarily of alcohol that is in liquid form is arranged to be supplied from the container 7 to the fuel supply channel 5. In order to realize a smooth fuel supplying process, the fuel supply channel 5 is preferably made of a porous material, high polymer fiber, or a high polymer porous film obtained through baking SiO₂ or Al₂O₃, for example. Further, it is noted that the high polymer fiber or the high polymer porous film used in the present example is preferably of a type that does not deform upon coming into contact with the fuel.

In one preferred embodiment, members having fuel blocking functions (not shown) are arranged between laterally adjacent cells of FIG. 4 in order to prevent non-reacted fuel from reaching the cathodes 4 of the cells from the fuel supply channel 5 (a type of crossover effect). For example, high polymer materials such as polyethylene and polypropylene, or inorganic oxide thin films such as glass and aluminum oxide may be arranged between adjacent cells so that fuel may be blocked and prevented from reaching the cathodes 4.

As is described above, the cathodes 4 of the cells of the cell groups are arranged to be directed outward. In other words, the cathodes 4 are arranged to face the frame 1. It is noted that a space is provided between the cathodes 4 and the frame 1. The frame 1 includes a vent hole (not shown) for connecting this space to the outside. Thus, air may be circulated though natural convection within the space created between the cathodes 4 and the frame 1. In this way, oxygen (oxidizer) may be supplied to the cathodes 4. In one embodiment, the air supplying mechanism for supplying air to the cathodes 4 may be controlled by arranging forced convection means such as a fan at a predetermined location of the frame 1.

It is noted that the materials used in the fuel cell 30 of FIG. 4 may be identical to those used in the fuel cell 20 of FIG. 3. However, the present invention is not limited to the above-described embodiments; that is, the structures shown in FIGS. 3 and 4 are merely illustrative examples. For example, various alterations may be made with respect to the arrangement and connection of the cells within the scope of the present invention.

### [Third Embodiment]

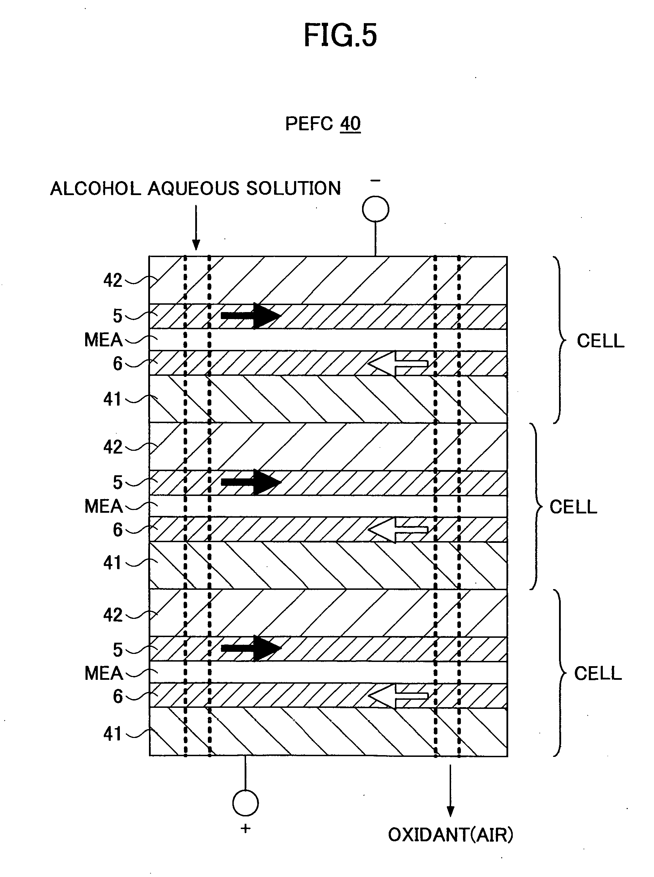

FIG. 5 is a diagram showing a configuration of a polymer electrolyte fuel cell 40 according to a third embodiment of the present invention.

As is shown in FIG. 5, the fuel cell 40 is realized by constructing a cell by arranging a membrane-electrode assembly (MEA) similar to that of FIG. 3 made up of an anode 3A, a cathode 4, and an ion exchange membrane 2 between porous films corresponding to a liquid fuel circulating part 5 and a oxidizer circulating part 6, arranging bipolar plates 41 and 42 made of fine carbon, for example, on the upper and lower sides of the cell, and stacking the resulting cell structures one on top of the other. It is noted that the anode 3A used in the present fuel cell structure may include the electrocatalyst for direct oxidation of alcohol according to an embodiment of the present invention as an active constituent.

In FIG. 5, an alcohol fuel supply channel is arranged to penetrate through the stacked cell structure so that the alcohol fuel may be supplied to the liquid fuel circulating parts 5 of the cells. Also, an oxidizer supply channel is arranged to penetrate through the stacked cell structure so that the oxidizer may be supplied to the oxidizer circulating parts 6 of the cells. It is noted that grooves (not shown) are formed on the anode and cathode sides of the bipolar plates 41 and 42 so that the alcohol fuel or the oxidizer supplied in the above-described manner may be evenly dispersed along the liquid fuel circulating part 5 or the oxidizer circulating part 6. As can be appreciated, plural cells are directly connected to each other in this stacked fuel cell 40, and thus, a desired output voltage according to the number of stacked cells may be obtained.

It is noted that alcohol alone or a mixture of alcohol and water may be used as fuel to be directly supplied to the anode 3A. In a preferred embodiment, a mixture of organic liquid fuel that is widely distributed in the market such as methanol, ethanol, or isopropyl alcohol and water is used to effectively prevent crossover and obtain good cell voltage and output.

### [Fourth Embodiment]

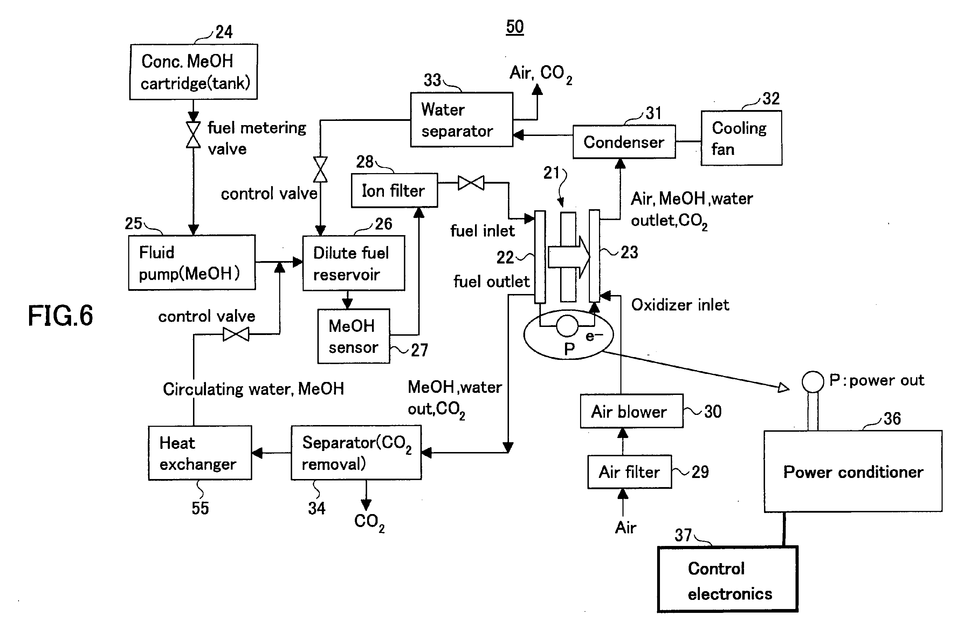

FIG. 6 is a diagram illustrating a specific example of a fuel cell power generating system 50 according to a fourth embodiment of the present invention for actually operating the polymer electrolyte fuel cell 40 of the third embodiment.

It is noted that in FIG. 6, a case of using methanol as fuel is illustrated as one example; however, the present invention is not limited to such an example, and the present embodiment may be applied to cases of using other types of organic liquid fuel including ethanol and isopropyl alcohol, for example. Also, it is noted that the system illustrated in FIG. 6 corresponds to a dilution and circulation system that is configured to forcibly supply the alcohol fuel and the oxidizer to the cell stack and realize dilution and circulation by mixing high concentration alcohol fuel with generated water. However, the present invention is not limited to such a system, and for example, embodiments of the present invention may also include a so-called passive fuel cell system where the fuel and the oxidizer are not forcibly supplied to the cell stack.

As is shown in FIG. 6, the fuel cell power generating system 50 includes a direct methanol fuel cell stack 21 that uses methanol as fuel, and the fuel cell stack 21 is configured to co-operate with a fuel cell circulating part 22 and an oxidizer circulating part 23.

According to the present example, fuel is supplied from a fuel container 24 storing high concentration methanol to a mixing container 26 by means of a fuel delivery mechanism (fluid pump) 25, and after the methanol concentration is adjusted to a suitable level by a methanol concentration sensor 27, the fuel is forcibly sent to the fuel circulating part 22 via an ion filter 28. The oxidizer, which corresponds to air in most cases, is forcibly sent to the oxidizer circulating part 23 by an oxidizer delivery mechanism (air blower) 30 via an oxidizer filter (air filter) 29. Waste generated at the fuel circulating side and the oxidizer circulating side (including generated products such as water and carbon dioxide) are collected or discharged as circulating water or discharge gas by a first water separator 33 including a condenser 31 that co-operates with a cooling fan 32 or a second water separator 34 and a heat exchanger 35. It is noted that the direct output of the cell stack may be controlled to a desired output voltage and output specifications by an output adjustor (power conditioner) 36.

Also, the power generating system 50 of the present example requires a so-called BOP (balance of plant) system corresponding to a mechanism for activating the power generation and maintaining the fuel cell power generation of the direct methanol fuel cell stack 21, and accordingly, the power generating system 50 includes an accessory/output control electricity control system for performing various control operations using accessories such as a fluid pump, an air blower, and a concentration sensor for maintaining power generation through controlling the fuel supply amount, the methanol concentration, and the fuel supply timing and procedure, for example.

In the following, the present invention is represented by specific examples. However, it is noted that such examples are merely used to facilitate understanding of the present invention, and the present invention is by no way limited by such examples.

As is described above, there are problems with regard to controllability and productivity in the case of producing a multicomponent electrocatalyst made up of plural elements through the so-called wet process using solution reaction. In turn, according to an embodiment of the present invention, a reaction site is provided under a vacuum environment that is free of impurities, and the multicomponent electrocatalyst is produced by a vapor phase process at such a reaction site.

In one embodiment, the vapor phase process for producing the electrocatalyst made of such a multicomponent material may involve a technique of using plural elements such as platinum, ruthenium, and molybdenum in the form of pure metals or compounds thereof as the starting material; evaporating the material using laser, heat, plasma, or ion bombardment; and depositing the evaporated material on a conductive support (e.g., carbon powder support). In other embodiments, chemical vapor deposition (CVD), or physical vapor deposition (PVD) such as gas evaporation, vacuum deposition, or plasma assisted vacuum deposition may be used. However, it is noted that sputtering is preferably used from in view of convenience and controllability of the material composition and film quality, for example.

In producing the multicomponent electrocatalyst by the vapor phase process as is described above, in the case where vacuum deposition or gas evaporation is used, the electrocatalyst is preferably produced under a processing pressure above 2 X 10⁻² Pa, and more preferably within the 10⁻² Pa range in view of achieving cost efficiency, for example. In the case where CVD is used, the processing pressure is preferably less than 10 Pa in view of achieving good film quality, cost efficiency, and device productivity, for example.

### [Examples]

In the following, a preferred sputtering process to be used in an embodiment of the present invention is described.

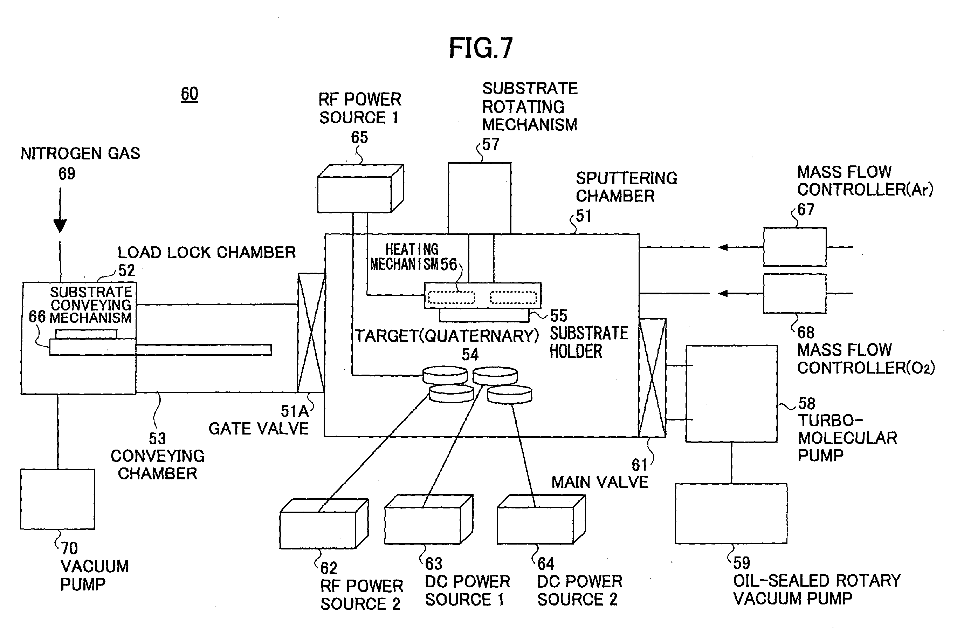

FIG. 7 is a diagram showing a configuration of a sputtering apparatus 60 used in an embodiment of the present invention for forming an electrocatalyst on a substrate.

As is shown in FIG. 7, the sputtering apparatus 60 includes a sputtering chamber 51, a substrate conveying chamber 53 that is connected to the sputtering chamber 51 via a gate valve 51A, and a load lock chamber 52 in which a substrate conveying mechanism 66 is provided.

The substrate on which the electrocatalyst is to be formed is arranged to be mounted on a substrate holder 55 and introduced into the load lock chamber 52 that is contains nitrogen gas supplied from a gas line 69. Then, the substrate is introduced into the substrate conveying chamber 53 from the load lock chamber 52 by the substrate conveying mechanism 65. Then, after air is suctioned from the substrate conveying chamber 53 by the vacuum pump 70 to create a vacuum, the substrate along with the substrate holder 55 is introduced into the sputtering chamber 51 via the gate valve 51A.

Air is suctioned from the sputtering chamber 51 by a turbo-molecular pump 58 and/or a oil-sealed rotary vacuum pump to create and maintain a high vacuum with a pressure of no more than 5×10⁻⁵ Pa. The substrate holder 55 that is introduced into the sputtering chamber 51 along with the substrate is held by a holding mechanism that includes a heating mechanism 56, and may be rotated by a substrate rotating mechanism 57 as is necessary or desired.

To realize vaporization/deposition of one or more elements in the sputtering process performed within the sputtering apparatus of FIG. 7, plural metal element targets 54 are placed within the sputtering chamber 51, and a direct current power source 63/64, or a high frequency (RF) power source 62/65 is connected to each of the targets 54 to realize low pressure gaseous discharge.

In the low pressure gaseous discharge process, argon gas is introduced into the vacuum at an appropriate flow rate and an appropriate processing pressure via a mass flow controller 67 so that argon ions within plasma generated through magnetron discharge may collide with the surface of the metal target to realize sputtering of the metal target. In this case, the target is selected according to the element composition of the electrocatalyst and the discharge power used in the sputtering process is adjusted according to the element composition ratio of the electrocatalyst so that an electrocatalyst may be formed on the substrate at an arbitrary element composition ratio.

In the sputtering apparatus 60 of FIG. 7, the substrate being held by the substrate holder 55 is heated to a temperature of 800 °C inside the sputtering chamber 51 and the substrate is rotated at a speed of up to 100 rpm to deposit the desired electrocatalyst on the substrate. It is noted that in FIG. 7, a high frequency power direct bias may be applied to the substrate by the high frequency power source 65 to create a direct bias so that reversed sputtering may be performed on the surface of the substrate to clean the substrate surface before forming the electrocatalyst thereon. Also, sputtering and cleaning of the targets 54 may be performed by driving the high frequency power source 65. Further, bias sputtering may be performed by applying a high frequency electrode to the substrate by the high frequency power source 65 to maintain the substrate at a negative bias potential during the electrocatalyst deposition process performed within the sputtering apparatus 60 of FIG. 7.

The illustrated sputtering apparatus 60 also includes a mass flow controller 68 for supplying oxygen gas to the sputtering chamber 51.

FIG. 8A is a diagram showing an example of the plural cathodes 54 placed within the sputtering chamber 51. FIG. 8B is a diagram showing an example of a metal catalyst formed by multicomponent simultaneous sputtering on the substrate in the manner described above; namely, this drawing shows the metal catalyst formed through sputter deposition in a gas phase.

As is shown in FIG. 8A, in the present embodiment, by placing plural targets 54 within the sputtering chamber 51, two or more given metal elements may be simultaneously sputtered to form a multicomponent metal catalyst as is shown in FIG. 8B in an efficiently manner while controlling the composition thereof.

### [Comparison Example 1]

In comparison example 1, a gold line with a diameter of 0.2 mm as a lead was welded to a gold plating (0.05 mm thick) having a diameter of 8 mm using a spot welding apparatus to thereby fabricate a substrate on which an electrocatalyst may be formed. On one side of the gold plating, a catalyst film with a composition of Pt80-Ru20 and a film thickness of approximately 0.1 µm was formed on a film formation area of the gold plating with a diameter of 6 mm at a substrate temperature of 300 °C using the sputtering apparatus shown in FIG. 7. In this way, an electrocatalyst according to comparison example 1 was formed (simply referred to as electrode hereinafter).

Table 3 indicated below shows electrochemical measurements and evaluation results for a so-called half cell that uses the electrocatalyst according to comparison example 1 along with measurements and evaluation results for half cells that use other types of electrocatalysts. It is assumed that in the measurements of table 3, a 1N sulfuric acid solution as a normal test solution with methanol added thereto to obtain a 1M solution is used as a testing solution (alcohol electrolytic solution).

**[Table 3]**

| | Substrate | Sputtering Pressure | Catalyst Layer | Current Density/mA cm⁻² | | Evaluation Result |
|---|---|---|---|---|---|---|
| | | | | 0V | Peak | |
| Comparison Example 1 | Au | 0.67 | Pt80Ru20 | 0 | 0 | × |
| Comparison Example 2 | Au | 5 | Pt80Ru20 | 9.9 | 18 | Δ |
| Example 1 | Au | 0.67 | Pt69Mo31 | 0 | 2 | × |
| Example 2 | Au | 5 | Pt87Mo13 | 2.7 | 56 | O |
| Example 3 | Au | 5 | Pt82Mo18 | 4.4 | 112 | O |
| Example 4 | Au | 5 | Pt69Mo31 | 10.6 | 192 | O |

It is noted that in Table 3, the numbers indicated after metal element symbols in the column describing the catalyst layer represents the composition ratio (at%). In the sputter film deposition process performed in comparison example 1, the pressure during sputtering (sputtering pressure) was set to 0.67 Pa, a high frequency power of 200 W was applied to the Pt target, a high frequency power of 150 W was applied to the Ru target, and the temperature was heated to 300 °C.

Upon conducting controlled potential electrochemical measurement CV (Cyclic Voltammetry) of methanol electrode oxidation on the above solution at a potential scanning speed of 10 mV/s using the electrode of comparison example 1 as an active electrode, a platinum line as a counter electrode, and Ag/Ag₂SO₄ as a reference electrode, an anodic oxidation current from electrode oxidation was hardly detected.

### [Comparison Example 2]

In comparison example 2, a Pt-Ru alloy electrocatalyst was formed in a manner similar to comparison example 1 by applying a high frequency power of 200 W to the Pt target, applying a high frequency power of 150 W to the Ru target, and performing sputter film deposition for 30 minutes at a substrate temperature of 300 °C. In comparison example 2, the sputtering pressure was set to 5 Pa, and the electrocatalyst was formed at about the same composition ratio of Pt80-Ru20 as comparison example 1.

Upon using the same testing solution corresponding to a mixture of methanol and sulfuric acid, and measuring the anode current of electrode oxidation in the same manner as is described above, an anodic oxidation current was detected, and an oxidation peak current density of 18 mA/cm2 was measured. The Pt80-Ru20 alloy catalyst of comparison example 2 corresponds to the catalyst film used in the conventional art, and the obtained oxidation peak current density is about the same as that obtained in conventional applications. Accordingly, in the following descriptions, this Pt80-Ru20 alloy catalyst is used as a comparison standard.

### [Examples 1-4]

In examples 1-4, Pt-Mo two-element electorcatalyst films were formed on the substrate through sputtering in the manner similar to comparison examples 1 and 2. However, it is noted that in examples 1-4, heating was not performed during the sputtering process.

Specifically, the Pt-Mo alloy catalyst film of example 1 was formed by setting the sputtering pressure to 0.67 Pa, applying a high frequency power of 200 W to the Pt target, and applying a direct current power of 200 W to the Mo target.

The Pt-Mo alloy catalyst film of example 2 was formed by setting the sputtering pressure to 5.0 Pa, applying a high frequency power of 200 W to the Pt target, and applying a direct current power of 50 W to the Mo target.

The Pt-Mo alloy catalyst film of example 3 was formed by setting the sputtering pressure to 5.0 Pa, applying a high frequency power of 200 W to the Pt target, applying a direct current power of 100 W to the Mo target.

The Pt-Mo alloy catalyst film of example 4 was formed by setting the sputtering pressure to 5.0 Pa, applying a high frequency power of 200 W to the Pt target, and applying a direct current power of 200 W to the Mo target.

The electrocatalysts (electrodes) of examples 1-4 were applied to half cells, and electrochemical measurements were conducted thereon with the testing solution including methanol in a manner similar to comparison examples 1 and 2, the results of which are shown in Table 3 along with the measurement results for comparison examples 1 and 2. As is described above, in Table 3, the numbers indicated next to the metal element symbols Pt, Ru, and Mo represent the composition ratio of the respective elements (at%).

It is noted that anodic oxidation characteristics of a catalyst film cannot be evaluated based solely on its anodic oxidation peak current (density), and accordingly, the oxidation current densities of the electrocatalyst films at 0V potential are also shown in Table 3 to provide a comprehensive view of practical characteristics such as the over voltage from polarization and the rise potential of the oxidation current, for example.

As is shown in Table 3, in the case where sputtering is performed at a processing pressure of 0.67 Pa (i.e., comparison examples 1 and example 1), the anodic oxidation current of methanol can hardly be detected. On the other hand, in when the sputtering pressure is set to 0.8 Pa or higher, a sharp increase in the anodic oxidation current can be observed. Particularly, in the case where sputtering is performed at a processing pressure of 5 Pa (i.e., comparison example 2 and examples 2-4), although the oxidation current density at the 0V potential may be lower than that of the convention Pt-Ru catalyst, the anodic oxidation peak current density may be substantially increased compared to the conventional Pt-Ru catalyst, and as the amount of Mo is increased, the potential of the rise of the oxidation current may be shifted to a low potential and overvoltage due to polarization may be prevented. When the sputtering pressure is set to be greater than 5 Pa, the anodic oxidation current starts to gradually decrease, and degradation in the anodic oxidation current characteristics can be observed when the sputtering pressure is increased to above 10 Pa.

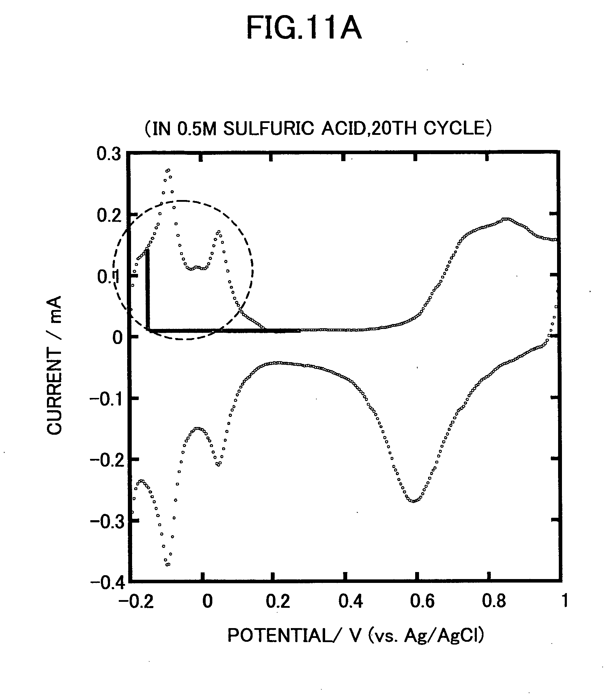

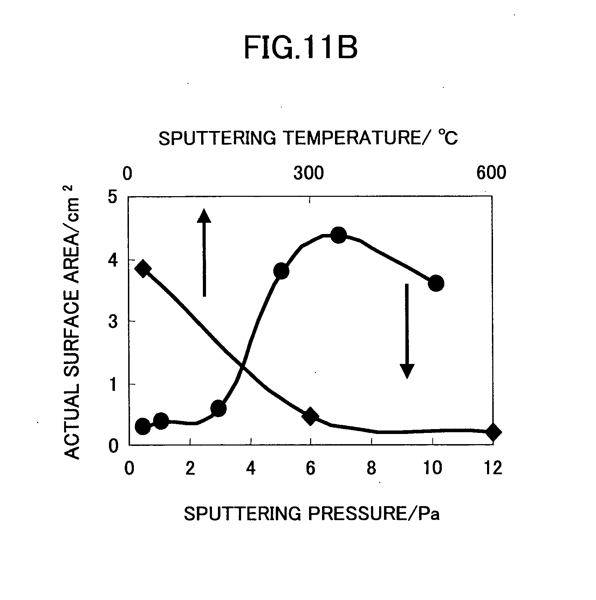

To verify the above effects in the anodic current characteristics, the relationship between the sputtering pressure and the temperature of the electron conductive substrate (also simply referred to as substrate hereinafter) on which catalyst film deposition is performed (also referred to as sputtering temperature hereinafter) was examined using the electrochemical measurement CV. As is widely known, activation of a catalyst relies on the quantity of reaction activation points (reaction sites) at the catalyst surface. The catalyst surface in this context is represented by the actual surface area (also referred to as actual active area) rather than the geometric area of the catalyst and is substantially affected by the surface roughness of the catalyst. It is noted that the actual surface area of a platinum catalyst may be obtained by electrochemically cleaning the platinum, determining the hydrogen adsorption/desorption electrical charge of a CV curve obtained through potential scanning within a range of several hundred mV right below an electric double layer area (see FIG. 11A), and dividing the obtained value by a predetermined constant. FIG. 11B shows actual surface areas of platinum catalysts formed with different sputtering conditions that may be obtained in the manner described above from the CV curve in sulfuric acid solution. As can be appreciated from FIG. 11B, the actual surface area may be maximized when the sputtering pressure is set to around 6 Pa, and the actual surface area is reduces as the pressure is lowered. It is noted that the data of this graph pertains to single-metal platinum; however, similar features may be anticipated with respect to platinum-based two-element or three-element alloy catalysts according to embodiments of the present invention as is reflected by the results shown in Table 3. It is noted that obtaining the actual surface area of a multicomponent alloy thin film from the CV curve as is described above is rather difficult, and simple means for obtaining such a measurement is not known. However, as can be appreciated, the characteristics realized by the sputtering conditions according to embodiments of the present invention are generally consistent with the data of FIGS. 11A and 11B as is described above.

### [Examples 5-9]

In examples 5-9, Pt-Ru-Mo three-element electrocatalysts were fabricated on substrates using fabrication methods similar to those used in examples 1-4.

The Pt-Ru-Mo alloy catalyst film of example 5 was fabricated by setting the sputtering pressure to 0.76 Pa, applying a high frequency power of 200W to the Pt target, applying a high frequency power of 200 W to the Ru target, applying a direct current power of 300 W to the Mo target, and executing sputtering without heating.

The Pt-Ru-Mo alloy catalyst film of example 6 was fabricated by setting the sputtering pressure to 5.0 Pa, applying a high frequency power of 200W to the Pt target, applying a high frequency power of 200 W to the Ru target, and applying a direct current power of 50 W to the Mo target.

The Pt-Ru-Mo alloy catalyst film of example 7 was fabricated by setting the sputtering pressure to 5.0 Pa, applying a high frequency power of 200W to the Pt target, applying a high frequency power of 200 W to the Ru target, and applying a direct current power of 100 W to the Mo target.

The Pt-Ru-Mo alloy catalyst film of example 8 was fabricated by setting the sputtering pressure to 5.0 Pa, applying a high frequency power of 200W to the Pt target, applying a high frequency power of 200 W to the Ru target, and applying a direct current power of 200 W to the Mo target.

The Pt-Ru-Mo alloy catalyst film of example 9 was fabricated by setting the sputtering pressure to 5.0 Pa, applying a high frequency power of 200W to the Pt target, applying a high frequency power of 200 W to the Ru target, and applying a direct current power of 300 W to the Mo target.

Further, these three-element electrocatalysts (electrodes) were applied to half cells, and electrochemical measurements were preformed thereon in the manner similar to comparison examples 1 and 2 using the testing solution including methanol. Table 4 indicated below shows the measurement results obtained from performing such measurements. It is noted that in Table 4, the numerical values indicated next to the metal element symbols Pt, Ru, and Mo represent the composition ratio of the respective elements (at%).

**[Table 4]**

| | Substrate | Sputtering Pressure | Catalyst Layer | Current Density/mA cm⁻² | | | Evaluation Result |
|---|---|---|---|---|---|---|---|
| | | | | -200 mV | 0V | Peak | |
| Comparison Example 2 | Au | 5 | Pt80Ru20 | 1.1 | 9.9 | 18 | Δ |
| Example 5 | Au | 0.67 | Pt47Ru19 Mo34 | 0 | 0 | 22 | × |
| Example 6 | Au | 5 | Pt71Ru26 Mo3 | 3.2 | 26 | 54 | O |
| Example 7 | Au | 5 | Pt65Ru25 Mo10 | 1.8 | 35 | 104 | O |
| Example 8 | Au | 5 | Pt57Ru23 Mo20 | 1.4 | 25 | 80 | O |
| Example 9 | Au | 5 | Pt47Ru19 Mo34 | 2.8 | 35 | 74 | O |

As is shown in Table 4, the methanol anodic oxidation current of the Pt-Ru-Mo film formed through sputtering at a processing pressure of 0.67 Pa is quite low (see example 5). The anodic oxidation peak current densities of the Pt-Ru-Mo films formed through sputtering at a processing pressure of 5 Pa are substantially higher than those of conventional Pt-Ru-Mo films. Also, the oxidation current densities at 0V potential of the three-element Pt-Ru-Mo catalysts are higher than those of the Pt-Ru films described above regardless of their composition ratios.

As can be appreciated, in the present examples, by including Ru, overvoltage due to polarization may be reduced and the rise of the oxidation current may be shifted to a low potential. Also, by including Mo, the oxidation peak current density may be increased.

The above-described effects are particularly prominent when the sputtering pressure exceeds 0.8 Pa, and are saturated around a sputtering pressure of 5 Pa after which the effects are gradually reduced until reaching a sputtering pressure of 10 Pa. When the sputtering pressure reaches a sputtering pressure of 13 Pa or greater, desired characteristics may not be obtained. Also, when the processing pressure exceeds 13 Pa, the turbo-molecular pump may be overloaded, and thereby, the processing pressure for fabricating the Pt-Ru-Mo alloy catalyst film through sputtering is preferably set to be no greater than 10 Pa. Such a feature may also be anticipated from the data of FIGS. 11A and 11B. It is noted that when the sputtering pressure exceeds 10 Pa, not only are the characteristics of the catalyst degraded, but impedance matching within the electrical discharge space becomes impossible, and abnormal discharge may frequently occur in low pressure glow discharge which is the basis of sputtering discharge. Also, when sputtering discharge is performed at a pressure above 100 Pa, the mean free path λ of the sputtering element particles may be on the order of 0.1 mm or lower so that it may be difficult to properly deposit the sputtering element particles on the substrate. Further, when the sputtering pressure exceeds 10 Pa, the vacuum pumping system may be overloaded. It is noted that the sputtering apparatus 60 of FIG. 7 may use vacuum pumps other than those described above such as an oil diffusion pump or a cryo pump. Even in such cases, a large capacity vacuum pump has to be used in order to maintain a desired processing pressure exceeding 10 Pa. However, in consideration of manufacturing costs, sputtering of the Pt-Ru-Mo alloy catalyst film is preferably performed at a sputtering pressure of 10 Pa or lower

### [Effects of Heating during Sputtering]

In the following, the effects of substrate heating that is performed during a sputtering process are described.

In examples 5-9, the temperature of the substrate upon performing sputtering is approximately 40 °C when no heating process is performed thereon. According to embodiments of the present invention, although the temperature of the substrate may vary depending on the sputtering power (e.g., applying power of 50-400 W), it has been found through experiments that the substrate temperature is within a range of 25-55 °C. In the case of forming a two-element or three-element electrocatalyst through sputtering, a difference in film quality is created between the electrocatalyst film fabricated through sputtering while heating the substrate and the electrocatalyst film fabricated through sputtering without heating the substrate. Such an effect is generally known as the heating effect in sputtering technology and may exert an influence on the intricacy of the fabricated thin film, reactions occurring within the film during film deposition, and other factors associated with the heating process, for example.

The inventors of the present invention expected the above effect to be particularly be prominent in a multicomponent alloy made up of at least three elements, and conducted research on the substrate heating effect in electrocatalyst fabrication through sputtering.

Upon observing the anodic oxidation characteristics of methanol in cases of using Pt-Ru two-element catalyst alloys with various Ru composition ratios, it has been found that a high oxidation peak current may be realized in the case of using an electrocatalyst with a composition ratio of Pt:Ru = 73:27 (when Pt=1 then Ru=0.38) that is fabricated without substrate heating. However, when a sample of the same was left for a few weeks and evaluated thereafter, a substantial degradation in its characteristics was detected. On the other hand, in a case of using an electrocatalyst fabricated through sputtering and heating the substrate to a temperature of 300 °C, although a slight decrease in the oxidation peak current was detected owing to influences from the sputtering pressure and the temperature conditions, time-lapse-based changes in the electrocatalyst characteristics were hardly detected.

With respect to a three-element Pt-Ru-Mo alloy, time-lapse-based characteristic degradation of approximately 20% was detected in a sample of the Pt-Ru-Mo alloy film fabricated through sputtering without heating. As can be appreciated, the extent of characteristic degradation can be reduced in the three-element alloy compared to the Pt-Ru two-element alloy. It is believed that such an effect occurs owing to the fact that Mo is included in the electrocatalyst film.

On the other hand, in the case of using a Pt-Ru-Mo electrocatalyst alloy that is fabricated through sputtering and heating the substrate to a temperature of 300 °C, time-lapse-based changes were not detected and improvements in the electrocatalyst characteristics were seen.

In the following descriptions of experiments conducted for assessing the effects of embodiments of the present invention, the Pt80-Ru20 alloy composition (comparison example 2) that is known to realize desirable effects on anodic oxidation of methanol without increasing the Ru composition ratio is selected as the electrocatalyst composition used in the prior art, and an electrocatalyst film with the above alloy composition that is fabricated through sputtering and heating the substrate to a temperature of 300 °C is used as a comparison example.

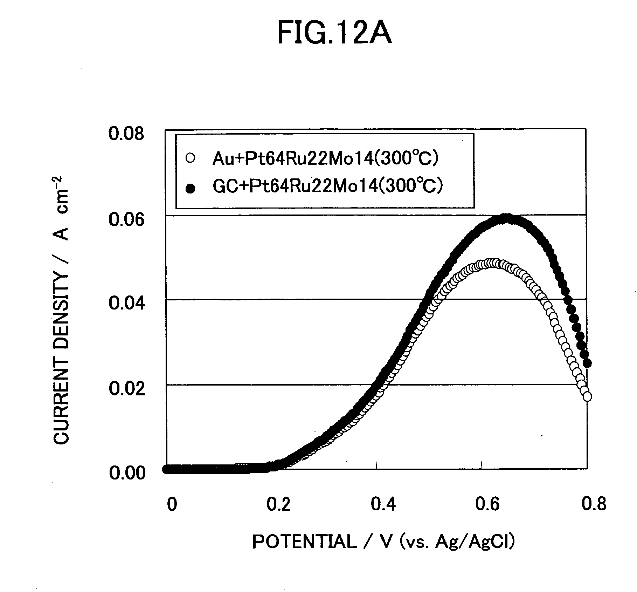

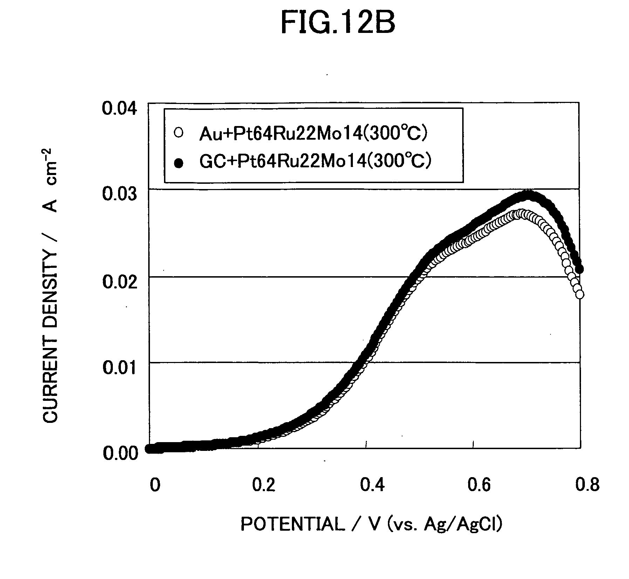

It is noted that influences of the substrate temperature during sputtering may vary depending on the type of substrate used. As an example, a case of using a metal substrate and a case of using a glassy carbon (GC) substrate were assessed to find that substantially identical characteristics may be obtained up to a temperature of 300 °C. FIGS. 12A and 12B are exemplary representations of electrode oxidation characteristics of the electrocatalyst fabricated through sputtering and at a substrate temperature of 300 °C. Specifically, FIG. 12A shows electrode oxidation characteristics in the case of performing methanol oxidation, and FIG. 12B shows electrode oxidation characteristics in the case of performing ethanol oxidation. It is noted that in these drawings, numerical values indicated next to the alloy element symbols represent the element composition ratios of the respective elements (at%). It is noted that when sputtering was performed at a substrate temperature exceeding 300 °C, electrocatalyst characteristics were slightly degraded particularly for the electorcatalyst formed on the metal substrate. The extent of characteristic degradation occurring in the electrocatalyst formed on the GS substrate was relatively small. In practical applications, a multicomponent catalyst may be supported by a conductive substrate such as that made of carbon to realize an embodiment of the present invention. It is noted that embodiments of the present invention are not limited to the use of the electrocatalyst fabricated at a sputtering temperature of 300 °C as is illustrated in FIGS. 12A and 12B; rather, an oxidation peak current may be obtained up to a sputtering temperature of 600 °C and desirable catalyst characteristics may be obtained with any sputtering temperature up to 600 °C, for example.

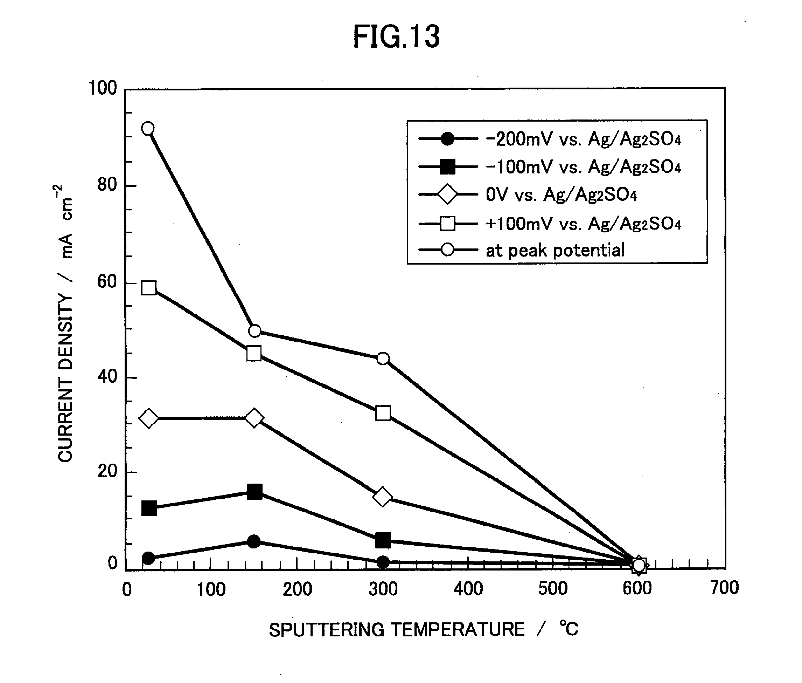

Next, overall influences from the substrate temperature including that from a sputtering temperature of around 600 °C were contemplated. Specifically, a metal substrate that is suitable for half cell evaluation was used as a representative example of a substrate, and a Pt65-Ru25-Mo10 three-element catalyst film was formed through sputtering. FIG. 13 shows a relationship between the substrate temperature during sputtering and the current density obtained upon performing methanol oxidation using the electrocatalyst fabricated through sputtering. It is noted that FIG. 13 shows electrochemical measurement results obtained in a case of using Ag/Ag₂SO₄ as a reference electrode in order to make comparisons with the electrochemical measurement results obtained in the previously described cases using Ag/AgCl as the reference electrode. In the present case, after checking the correspondence of data such as the CV curve, measurement was performed at a potential scanning speed of 10 mV/s using the Ag/Ag₂SO₄ reference electrode. As can be appreciated from FIG. 13, desirable electrode oxidation characteristics (oxidation current density) of methanol may be obtained with a sputtering temperature of 300 °C or lower, the characteristics are rather degraded at the sputtering temperature of 600 °C. Although the actual surface area of the electorcatalyst substantially decreases when the sputtering temperature exceeds 300 °C as can be appreciated from FIG. 11B, an oxidation peak current may still be obtained as is shown in FIG. 13. However, when the sputtering temperature exceeds 600 °C, the oxidation peak current is also substantially reduced. It is noted that effects similar to those described above were found in the electrode oxidation characteristics of ethanol as well. Upon conducting dedicated analyses in order to find the reasons for explaining such effects from the structure of the catalyst film, the inventors of the present invention have found the following distinctions between catalysts formed at normal temperature (no heating) and at high temperature of at least 600 °C.

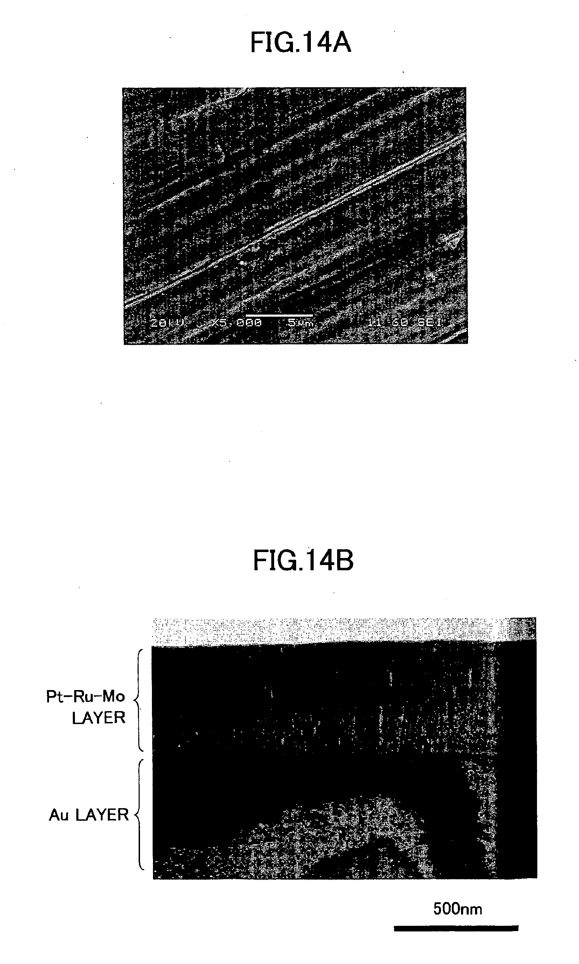

FIG. 14A shows a scanning electron microscope image (5000^{X}) of the surface of a catalyst film formed by sputtering Pt, Ru, and Mo at 200 W, 200 W, and 400 W, respectively, for 30 minutes on a gold (Au) substrate without heating the substrate. In this example, a composition of Pt:Ru:Mo = 40:18:42 (at%) is realized in the catalyst film. FIG. 14B shows a transmission electron microscope (TEM) image of a cross-section of the catalyst film. Based on this image, it can be appreciated that the film thickness of the catalyst film is around 400-500 nm, and according to TEM analyses of the film structure, it can be appreciated that the film structure of the catalyst film is close to an amorphous structure owing to its weak crystalline properties and microscopic cracks are formed therein.

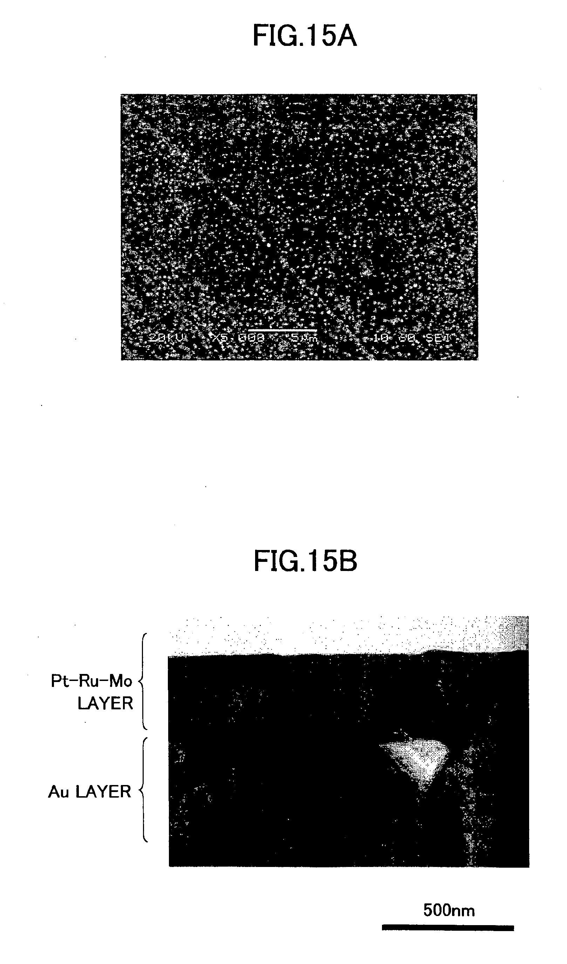

On the other hand, a catalyst film formed through sputtering using the same sputtering power conditions as is described above while heating the substrate to 600 °C has a composition of Pt:Ru:Mo = 46:19:35 (at%). FIG. 15A shows a scanning electron microscope image of the surface of such a catalyst film. As can be appreciated from this drawing, more grainy spots may be observed on the surface of this catalyst film. FIG. 15B shows a transmission electron microscope image of a cross-section of this catalyst film. In this example, the film thickness of this catalyst film is around 250-300 nm; that is, even though sputtering is performed for the same amount of time as the previous example where sputtering does not accompany heating, film deposition is performed in a more intricate manner in this example so that the catalyst film may be condensed. Such an effect can be discerned from the TEM crystallinity analysis of the film structure where the cross-section image of the Pt-Ru-Mo shows an uneven density distribution. In other words, a more crystalline film structure is realized in the present example compared to the case in which heating is not performed. It is believed that the grainy spots as described above represent portions of the catalyst film with high crystallinity. Based on the above analysis, it may be appreciated that in a case where sputtering is performed at a temperature exceeding 600 °C, the structure of the electrocatalyst showing electrochemical activity may become too intricate to thereby hinder the formation of active sites and microscopic roughness of the catalyst element alloy thin film. Also, inventors of the present invention conducted research on the substrate.

Table 5 as indicated below shows the composition ratios of the respective elements of a catalyst film right after its formation that is realized by sputtering Pt, Ru, and Mo at 200 W, 200 W, and 400 W, respectively, at a temperature of 600 °C.

**[Table 5]**

| | Uppermost Surface | Intermediate Layer |
|---|---|---|
| Pt | 15 | 36 |
| Ru | 13 | 19 |
| Mo | 26 | 40 |
| Au | 10 | 3 |
| O | 36 | 2 |

It is noted that the above Table 5 indicates the results of performing elemental analysis in the depth direction while sputtering with an ion beam. It may be appreciated from this table that gold is included in the Pt-Ru-Mo layer even right after film formation. On the other hand, the presence of gold was hardly detected from a surface elemental mapping of a catalyst film formed at a temperature of 300 °C or lower. Table 6 shows measurement results from analyzing the catalyst film after exposing the film surface to electrochemical reactions by performing 200 CV cycles within a 0.5M sulfuric acid solution to simulate actual electrode oxidation reactions. As can be appreciated, an increase in the ratio of the gold element was observed.

**[Table 6]**

| | Uppermost Surface | Intermediate Layer |
|---|---|---|
| Pt | 24 | 36 |
| Ru | 17 | 20 |
| Mo | 21 | 40 |
| Au | 21 | 3 |
| O | 17 | 1 |

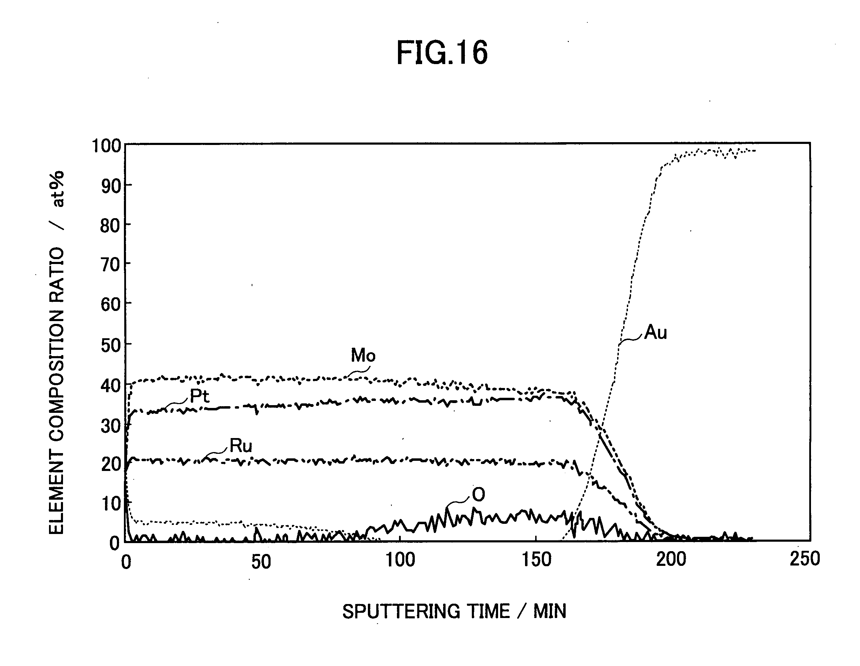

FIG. 16 represents an exemplary elemental analysis of a catalyst film in the depth direction.

As can be appreciated from the above descriptions, when the substrate temperature is set to a high temperature during a sputtering process, and when a substrate made of a metal element that easily migrates such as gold is used as an electrochemically stable electron conductive substrate (electrode substrate), the metal element tends to be accumulated at the surface of the catalyst film. Also, it can be easily estimated from experiment results that at a substrate temperature exceeding 600 °C, a conductive carbon substrate as well as a metal substrate may be substantially influenced by the substrate temperature. Based on such findings, it may be appreciated that the substrate temperature during a sputtering process is preferably arranged to be no more than 600 °C in view of the electrode oxidation characteristics as well as management, maintenance, and manufacturing cost of the sputtering process apparatus.

### [Example 10]

In an exemplary experiment 10, the element composition of comparison example 2 was used for comparison and the element compositions of examples 3, 4, 6, 8, and 9 out of the examples involving fabricating electorcatalysts at a sputtering pressure of 5.0 Pa were selected as representative effective electrocatalyst compositions, and electrocatalyst films were fabricated in the same manner as the other examples through sputtering for 30 minutes with the substrate temperature set to 300 °C. The electrocatalyst films fabricated in the above manner were used to construct half cells to evaluate their electrocatalytic performance.

In the experiment, the anodic oxidation characteristics of methanol obtained by the above element compositions were to be examined in order to check for changes in the ranking and the legitimacy of the measurements, and then, the anodic oxidation characteristics were measured by potential-controlled electrochemical measurement at a potential scanning speed of 10 mV/s using a testing solution including ethanol (ethanol electrolytic solution) and Ag/AgCl as a reference electrode.

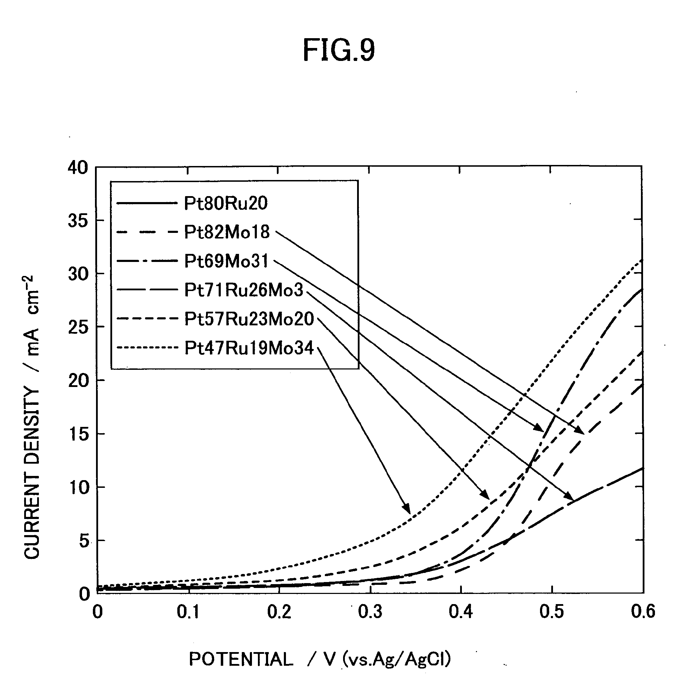

In the present example, the sweep potential was arranged to be no more than 600 mV. FIG. 9 shows the results of the experiment conducted under the conditions described above. It is noted that in FIG. 9, the horizontal axis represents the electrode potential, and the vertical axis represents the current density.

As can be appreciated from FIG. 9, the anodic oxidation peak current densities of the illustrated two-element and three-element electrocatalysts including platinum, ruthenium, and/or molybdenum are substantially increased compared to the conventional Pt-Ru catalyst. Also desirable results are obtained with respect to overvoltage from polarization.

Based on the results of the present experiment, it may be appreciated that a substantial increase in the oxidation current may be realized in the Pt-Ru-Mo electrocatalyst according to an embodiment of the present invention compared to the conventional electocatalyst (comparison example 2) with the same potential, and although the oxidation current density may not be as high as that for the case of methanol electrode oxidation as is shown in Table 4, the potential at which the oxidation current is obtained may be shifted to a low potential. In other words, the electrocatalyst according to an embodiment of the present invention may realize desirable electrode oxidation characteristics with ethanol as well as methanol.

### [Supporting Multicomponent Electrocatalyst on Conductive Support and Fabricating Membrane Electrode Assembly]

In the following, the manner in which a multicomponent electrocatalyst is supported on a conductive support to fabricate a membrane electrode assembly in the above experiment is described.

In an embodiment of the present invention, the conventional film formation method as is described above in relation to the first embodiment may be used to form a multicomponent electrocatalyst on a supporting material (conductive support) corresponding to an electron conductive base material.

Specifically, Vulcan XC-72R (Registered Trademark of Cabot Corporation) corresponding to carbon black powder may be used as the electron conductive support, and the multicomponent catalyst of the present embodiment in powdered form may be dispersed in the Vulcan XC-72R to be supported so that the electrocatalyst material may be produced. Then, a suitable solvent and an electrolyte polymer solution may be mixed with the material to prepare a so-called catalyst ink after which the film formation method as is described above in relation to the first embodiment may be used to construct the membrane electrode assembly.

### [Example 11]

In an embodiment of the present invention, the multicomponent electrocatalyst as described above may be used to construct a membrane electrode assembly as is shown in FIG. 3 using the fabrication method as is described above, and the membrane electrode assembly may be used to construct a stacked fuel cell employing a bipolar plate as is shown in FIG. 5. In a trial production, the fuel cell constructed in the above-described manner was used to fabricate two types of fuel cell power generator units.

A first fuel cell unit was configured into a natural circulation (passive) fuel cell that uses a mixture of ethanol and water as fuel and introduces air as the oxidant. The average single cell output density realized by this fuel cell unit was 10-14 mW/cm².

A second fuel cell unit was configured to use forced convection means for the fuel and the oxidant. The average output density realized by this fuel cell unit was approximately 34 mW/cm².

In another trial production, 34 layers of the single cell (with an effective cell area of 32 cm²) used in the first fuel cell unit were stacked to produce a fuel cell power generating unit. It was confirmed that an output of 12.5 W could be obtained by this fuel cell power generating unit. In other words, this fuel cell power generating unit may be used as a power source for an electronic apparatus with a power consumption of approximately 10 W.

In another trial production, a single cell with the same configuration and the same level of output density as the single cell of the first power generating unit but having a larger effective single cell area of 115 cm² was used, and 30 layers of the single cell were stacked to construct a fuel cell power generating unit. It was confirmed that an output of approximately 42 W could be obtained by this power generating unit.

In a further trial production, 30 layers of single cells having an effective cell area of 128 cm² were stacked to construct a fuel cell power generating unit with forced convection means. It was confirmed that even when taking into consideration a 23% power loss that may be attributed to the addition of peripheral means (i.e. convention means), an output of approximately 105 W could be obtained by this fuel cell power generating unit.

### [Example 12]

In another example, the electrocatalyst material according to an embodiment of the present invention was used, and the single cells similar to the ones used in example 11 were connected side-by-side to realize a planar fuel cell power generating unit having a structure similar to that shown in FIG. 4.

The power generating unit of the present example corresponds to a passive power generator that has 25 cells with an effective cell area of 18 cm² that are serially connected. Upon testing the power generating performance of this power generating unit by directly supplying a mixture of methanol and water as fuel thereto, it was confirmed that an output of approximately 8.2 W could be obtained by this unit.

It is noted that such a power generating unit may be suitably used as a power source for a mini or micromini electronic apparatus, for example.

### [Fifth Embodiment]

According to a fifth embodiment of the present invention, a power generating unit as described above in relation to example 11, particularly, the passive power generating unit that provides an output of approximately 42 W and includes single cells with an effective cell area of 115 cm² may be used along with accessories such as a power conditioner (e.g., voltage adjustor) and a peripheral controller to construct a power generating system as is shown in FIG. 6.

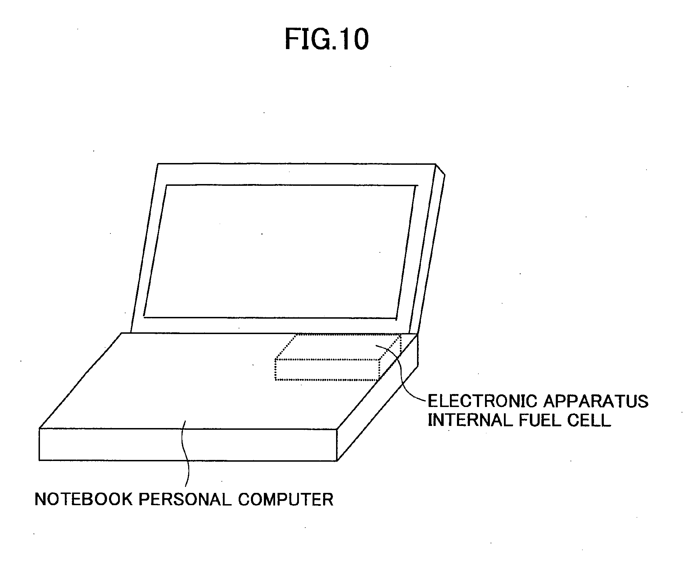

An experiment was conducted that involved supplying power to a conventional mobile personal computer as is shown in FIG. 10 using ethanol solution fuel in the above-described power generating system. Specifically, in this experiment, a relatively low power consumption type mini apparatus employing the Crusoe Processor TM5800-1GHz by Transmeta Corporation with a maximum power consumption of 37 W was used as the computer. The average power consumption of such a computer is estimated to be around 28 W.

For example, the fuel cell system according to the present embodiment may be incorporated into this mini computer using its space provided for a lithium ion battery (secondary battery) conventionally used as an auxiliary power source and a portion of its space provided for an optical disk drive (DVD drive apparatus). In this way, the power generating system of FIG. 6 may be used as a dedicated internal power source for this computer.

It is noted that an ethanol aqueous solution containing ethanol at approximately 3.8% by weight was used as the ethanol fuel in the present experiment, and the ethanol fuel was accommodated in a compact fuel container with a capacity of 85 ml.

The results of the experiment revealed that the power generating unit could generate a predetermined output 6 minutes after its activation, and operate as a power source throughout its practical utilization time. It is noted that in the present example, the power generating system of the present embodiment is used as an internal power source of a mini computer. However, embodiments of the present invention are not limited to such an example, and the fuel cell system may also be used as an external power source depending on the design configuration of the apparatus implementing the fuel cell system. For example, the fuel cell system may be used as a dedicated direct current power source or a universal power source as a substitution for a commercial power source.

Similarly, an experiment was conducted that involved connecting the power generating unit of example 12 having the planar cell structure to a micromini electronic apparatus such as a mobile phone. The result of the experiment indicated that the power generating unit of example 12 could also attain a workable level in the relevant application.

It is noted that a fuel cell according to an embodiment of the present invention is adapted to realize improved electrocatalytic efficiency, and an electronic apparatus may incorporate such a fuel cell as in the example described above. However, an electronic apparatus using a fuel cell according to an embodiment of the present invention is not limited to the example described above. That is, an electronic apparatus using a fuel cell as claimed in claim 22 may correspond to various types of electronic apparatuses. Also, as is described above, in one embodiment, the present invention may be suitably embodied as a direct methanol fuel cell (DMFC) that directly supplies methanol. In another embodiment, by using ethanol as fuel, safety and facility with regard to handling of fuel and safety with regard to the environment and health may be realized.

An electronic apparatus as claimed in claim 22 may include a desktop personal computer, a laptop, a notebook personal computer, a work station (high-end computer), a PDA (personal digital assistant), a power source for a battery charger directed to an electronic apparatus, a PHS (personal handy phone system), a mobile phone, a GPS terminal, a normal paper copier, a facsimile apparatus, an inkjet printer, a laser printer, an electronic book display, a LCD monitor apparatus, a liquid crystal projector, a projection display, an 1C card read/write terminal, a non-contact 1C card read/write terminal, an electronic blackboard (or whiteboard), a photo printer (e.g., sublimation type), a digital still camera, a digital movie camera, a personal computer peripheral apparatus such as a DVD drive, an industrial distributed power source, a domestic stationary distributed power source, an uninterruptible power source, an emergency power source (e.g., power source for a projector), a power source for outdoor camping, a wireless transceiver, a mobile robot power source, a disaster relief robot power source, an entertainment robot power source, a nursing assistance apparatus (e.g., nursing bed), a nursing assistance robot power source, an electric wheelchair power source, an electric vehicle power source, a medical apparatus support, a distributed power source, an electric artificial limb power source, an unmanned carrier vehicle power source, and a cooking electric appliance, for example. However the present invention is not limited to such examples.

### [Industrial Applicability]

According to an embodiment of the present invention, a direct alcohol fuel cell (DAFC) uses an electrocatalyst including a mixture of platinum and a substance made of at least one of molybdenum and a molybdenum compound as an active constituent; or an electrocatalyst including a mixture of platinum, ruthenium, and a substance made of at least one of molybdenum and a molybdenum compound as an active constituent, the elecrocatalyst being fabricated through sputtering which corresponds to a vapor phase method. By using such an electrocatalyst, high electromotive force and high output may be obtained with respect to electrode oxidation of methanol, ethanol, or isopropyl alcohol compared to the case of using a conventional electrocatalyst.

## Claims

1. An electrocatalyst for direct oxidation of alcohol comprising:
a mixture of platinum and a substance made of at least one of molybdenum and a molybdenum compound as an active constituent.

2. The electrocatalyst as claimed in claim 1, wherein
an atom ratio Pt:Mo between the platinum element and the molybdenum element of the mixture is within a range of 90-65:10-35 (at%).

3. The electrocatalyst as claimed in claim 1, wherein the mixture further includes ruthenium.

4. The electrocatalyst as claimed in claim 3, wherein
an atom ratio Pt:Ru:Mo between the platinum, the ruthenium, and the molybdenum of the mixture is within a range of 75-40:40-15:35-2 (at%).

5. A method for fabricating an electorcatalyst for direct oxidation of alcohol, the method comprising:
a film formation step for directly forming a film with a material of the electrocatalyst on an electron conductive base material using a vapor phase method; wherein
a pressure during the film formation step is within a range of 2X10⁻²-10 Pa; and
a temperature of the electron conductive base material during the film formation step is within a range of 25-600 °C .

6. The method as claimed in claim 5, wherein
the material of the electrocatalyst corresponds to a mixture of platinum and a substance made of at least one of molybdenum and a molybdenum compound.

7. The method as claimed in claim 6, wherein
the mixture further includes ruthenium.

8. A method for fabricating an electrocatalyst for direct oxidation of alcohol, the method comprising:
a film formation step for directly forming a film with a material of the electrocatalyst on an electron conductive base material through sputtering; wherein
a pressure during the film formation step is within a range of 0.8-10 Pa; and
a temperature of the electron conductive base material during the film formation step is within a range of 25-600 °C .

9. The method as claimed in claim 8, wherein
the material of the electrocatalyst corresponds to a mixture of platinum and a substance made of at least one of molybdenum and a molybdenum compound.

10. The method as claimed in claim 9, wherein
an atom ratio Pt:Mo between the platinum element and the molybdenum element of the mixture is within a range of 90-65:10-35 (at%).

11. The electrocatalyst as claimed in claim 9, wherein
the mixture further includes ruthenium.

12. The electrocatalyst as claimed in claim 11, wherein
an atom ratio Pt:Ru:Mo between the platinum, the ruthenium, and the molybdenum of the mixture is within a range of 75-40:40-15:35-2 (at%).

13. A direct alcohol fuel cell comprising:
a frame;
an electrolytic membrane that is arranged inside the frame and is held between an anode and a cathode;
a fuel supply channel that is arranged inside the frame and is configured to supply fuel containing alcohol.as a main component to the anode; and
an oxidant supply channel that is arranged inside the frame and is configured to supply an oxidant to the cathode; wherein
the electrocatalyst as claimed in claim 1 is used as the anode.

14. A direct alcohol fuel cell comprising:
a frame;
a plurality of cells arranged inside the frame each of which cells includes an anode, a cathode, and an electrolytic membrane held between the anode and the cathode;
a fuel supply channel that is arranged inside the frame and is configured to supply fuel containing alcohol as a main component to the anodes of the cells; and
an oxidant supply channel that is arranged inside the frame and is configured to supply an oxidant to the cathodes of the cells; wherein
the cells are stacked one on top of the other via a bipolar plate such that positive poles and negative poles of the cells are alternatingly arranged inside the frame; and
the electrocatalyst as claimed in claim 1 is used as the anodes of the cells.

15. A direct alcohol fuel cell comprising:
a frame;
a plurality of cells arranged inside the frame each of which cells includes an anode, a cathode, and an electrolytic membrane held between the anode and the cathode;
a fuel supply channel that is arranged inside the frame and is configured to supply fuel containing alcohol as a main component to the anodes of the cells; and
an oxidant supply channel that is arranged inside the frame and is configured to supply an oxidant to the cathodes of the cells; wherein
the cells are arranged on at least one plane and are serially connected; and
the electrocatalyst as claimed in claim 1 is used as the anodes of the cells.

16. The direct alcohol fuel cell as claimed in claim 13, wherein
the fuel containing alcohol as a main component includes a mixed solution of methanol and water as the main component.

17. The direct alcohol fuel cell as claimed in claim 13, wherein
the fuel containing alcohol as a main component includes a mixed solution of ethanol and water as the main component.

18. A method for fabricating the direct alcohol fuel cell as claimed in claim 14, wherein
the anodes of the cells are fabricated using the electrocatalyst fabricating method as claimed in claim 5.

19. A method for fabricating the direct alcohol fuel cell as claimed in claim 14, wherein
the anodes of the cells are fabricated using the electrocatalyst fabricating method as claimed in claim 8.

20. A method for fabricating the direct alcohol fuel cell as claimed in claim 15, wherein
the anodes of the cells are fabricated using the electrocatalyst fabricating method as claimed in claim 5.

21. A method for fabricating the direct alcohol fuel cell as claimed in claim 15, wherein
the anodes of the cells are fabricated using the electrocatalyst fabricating method as claimed in claim 8.

22. An electronic apparatus comprising:
the direct alcohol fuel cell as claimed in claim 13.
